# EUROPEAN PATENT SPECIFICATION

(11) **EP 3 381 645 B1**
(45) Date of publication and mention of the grant of the patent: **23.10.2019**
(21) Application number: 18164733.0
(22) Date of filing: 28.03.2018
(51) Int. Cl.: B29C 45/67, B29C 45/82, B29C 45/84, B29C 45/76

(54) **INJECTION MOLDING MACHINE**
SPRITZGIESSMASCHINE
MACHINE DE MOULAGE À INJECTION

(30) Priority: 31.03.2017 JP 2017071786
(43) Date of publication of application: 03.10.2018
(73) Proprietor: Sumitomo Heavy Industries, Ltd., Tokyo 141-6025 (JP)
(72) Inventor: YAMAGUCHI, Hiroshi, Chiba-shi, Chiba 263-0001 (JP)
(74) Representative: Louis Pöhlau Lohrentz

(56) References cited:
- EP-A1- 1 314 533
- DE-A1- 10 208 589
- US-A1- 2013 313 746

## Description

### BACKGROUND OF THE INVENTION

### Field of the Invention

Certain embodiments of the present invention relate to an injection molding machine.

### Description of Related Art

German Patent Application DE10208589A1 discloses an injection molding machine in which a hydraulic pump is switched on by a control unit when the pressure in a hydraulic accumulator reaches or falls below a lower pressure limit value and switched off when the pressure reaches or exceeds an upper pressure limit value.

European Patent Application EP1314533A1 discloses an injection molding machine in which oil supplied to an actuator is accumulated, and it is determined whether or not accumulating hydraulic pressure is sufficiently higher than an actuating hydraulic pressure.

United States Patent Application US2013313746 discloses an injection molding machine with a switching unit that switches the supply/non-supply of working oil for a hydraulic actuator.

In the related art, a configuration is known, in which various units (for example, a movement mechanism of an injection unit or the like) which are components of an injection molding machine are controlled by a liquid pressure such as a hydraulic pressure.

However, in a case where a unit is driven using a liquid pressure control, there is a problem that there is a large variation in a speed immediately after the drive of the unit starts. If there is a variation in an operation speed of the unit, a cycle time of injection molding is lengthened, and an operation is not stable.

### SUMMARY OF THE INVENTION

The present invention is made in consideration of the above-described problems, and an object thereof is to provide an injection molding machine capable of decreasing an operation variation of a unit which is driven using a liquidpressure control.

In order to achieve the above-described object, according to an aspect of the present invention, there is provided an injection molding machine, including: a cylinder which drives a movable member which is a component of the injection molding machine; a liquid pressure pump which supplies a working liquid to the cylinder; a flow path through which the liquid pressure pump and the cylinder are connected to each other; a flow path opening/closing unit which is provided in the flow path and opens or closes the flow path; and a controller which controls operations of the liquid pressure pump and the flow path opening/closing unit, in which the controller opens the flow path by the flow path opening/closing unit to operate the cylinder and drives the movable member in a state of driving the liquid pressure pump in a state where the flow path is closed by the flow path opening/closing unit so as to increase a liquid pressure of the working liquid between the liquid pressure pump and the flow path opening/closing unit.

According to the aspect of the present invention, it is possible to provide the injection molding machine capable of decreasing an operation variation of a unit which is driven using a liquid pressure control.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a view showing a state when a mold opening of a mold clamping unit according to a first embodiment is completed.
Fig. 4 is a sectional view taken along line IV-IV of Fig. 3.
Fig. 5 is a view showing a state when a mold of the mold clamping unit according to the first embodiment is clamped.
Fig. 6 is a sectional view taken along line VI-VI of Fig. 5.
Fig. 7 is a view showing a configuration of a liquid pressure circuit of a split mold opening/closing unit according to the first embodiment.
Fig. 8 is a flowchart of a split mold opening control performed by the liquid pressure circuit in the first embodiment.
Fig. 9 is a time-chart of the split mold opening control.
Fig. 10 is a view showing an injection unit according to a second embodiment and is a view showing a first state of a valve body of a direction switching valve.
Fig. 11 is a view showing the injection unit according to the second embodiment and is a view showing a second state of the valve body of the direction switching valve.
Fig. 12 is a view schematically showing a relationship between the valve body of the direction switching valve and a liquid pressure circuit in the second embodiment and is a view showing the first state of the valve body.
Fig. 13 is a view schematically showing the relationship between the valve body of the direction switching valve and the liquid pressure circuit in the second embodiment and is a view showing the second state of the valve body.
Fig. 14 is a partially sectional view showing a schematic configuration of a mold clamping unit of an injection molding machine according to a third embodiment.
Fig. 15 is a partially sectional view showing a schematic configuration of a movement unit of an injection molding machine according to a third embodiment.
Fig. 16 is a diagram showing a configuration of a controller according to a modification example of the first embodiment.
Fig. 17 is a graph showing a relationship between an elapsed time after start of a closing operation of a first split mold and a second split mold and a detection value of a first pressure detector of a first liquid pressure circuit in the modification example of the first embodiment.
Figs. 18A and 18B are views showing a mold clamping unit of an injection molding machine according to a fifth embodiment.
Figs. 19A and 19B are views showing an opening/closing unit which opens and closes a first fitting portion and a second fitting portion when a mold closing of the mold clamping unit according to the fifth embodiment is completed.

### DETAILED DESCRIPTION OF THE INVENTION

Hereinafter, embodiments will be described with reference to the accompanying drawings. In order to facilitate understanding of descriptions, the same reference numerals are assigned to the same constituent elements in each drawing as much as possible, and overlapping descriptions thereof are omitted.

### Schematic Configuration of Injection Molding Machine

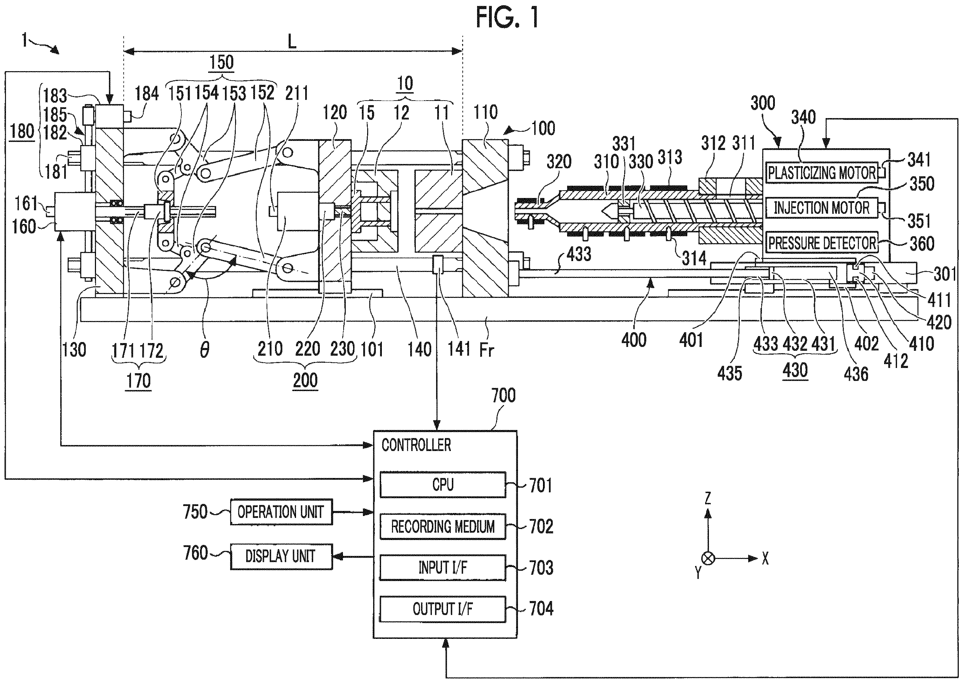

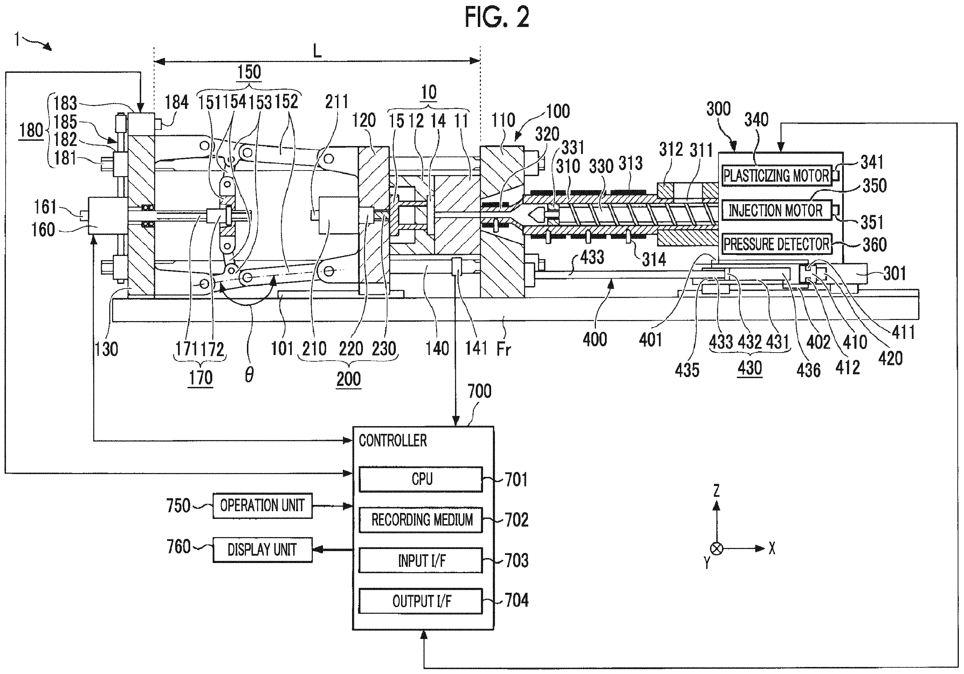

First, a schematic configuration of the entire injection molding machine 1 which becomes a base of a configuration of each embodiment below will be described with reference to Figs. 1 and 2. In addition, in Figs. 1 to 7 or the like, an X direction, a Y direction, and a Z direction are directions orthogonal to each other. The X direction and the Y direction are a horizontal direction, and the Z direction is a vertical direction. In a case where a mold clamping unit is a horizontal type clamping unit, the X direction is mold opening and closing directions, and the Y direction is a width direction of the injection molding machine 1.

### Injection Molding Machine

Fig. 1 is a view showing a state when a mold opening of an injection molding machine 1 according to an embodiment is completed. Fig. 2 is a view showing a state when a mold of the injection molding machine 1 according to the embodiment is clamped. As shown in Figs. 1 and 2, the injection molding machines 1 include a mold clamping unit 100, an ejector unit 200, an injection unit 300, a movement unit 400, a controller 700, and a frame Fr. Hereinafter, each component of the injection molding machine 1 will be described.

### Mold Clamping Unit

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 10. For example, the mold clamping unit 100 is a horizontal type clamping unit and mold opening and closing directions are a horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame Fr. A stationary mold 11 is attached to a surface of the stationary platen 110 facing the movable platen 120.

The movable platen 120 is movable in the mold opening and closing directions with respect to the frame Fr. A guide 101 which guides the movable platen 120 is placed on the frame Fr. A movable mold 12 is attached to a surface of the movable platen 120 facing the stationary platen 110.

The movable platen 120 is moved forward or rearward with respect to the stationary platen 110, and thus, closing, clamping, and opening of the mold are performed. The mold unit 10 is configured of the stationary mold 11 and the movable mold 12.

The toggle support 130 is connected to the stationary platen 110 with a gap therebetween, and is placed on the frame Fr to be movable in mold opening and closing directions . In addition, the toggle support 130 may be movable along a guide which is placed on the frame Fr. The guide of the toggle support 130 may be also used as the guide 101 of the movable platen 120.

In addition, in the present embodiment, the stationary platen 110 is fixed to the frame Fr, and the toggle support 130 is movable in the mold opening and closing directions with respect to the frame Fr. However, the toggle support 130 may be fixed to the frame Fr, and the stationary platen 110 may be movable in the mold opening and closing directions with respect to the frame Fr.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends signals indicating the detection results to the controller 700. The detection results of the tie bar strain detector 141 are used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and the attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 is configured of a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or the like and the second link 153 is attached to the toggle support 130 so as to be oscillated by pins or the like. The second link 153 is attached to the crosshead 151 via a third link 154. If the crosshead 151 is moved forward or rearward with respect to the toggle support 130, the first link 152 and the second link 153 are bent and stretched and the movable platen 120 is moved forward or rearward with respect to the toggle support 130.

In addition, the configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 is moved forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 is moved forward and the movable mold 12 comes into contact with the stationary mold 11. For example, a position or speed of the crosshead 151 is detected using a mold clamping motor encoder 161 or the like. The mold clamping motor encoder 161 detects the rotation of the mold clamping motor 160 and sends signals indicating the detection results to the controller 700. In addition, a crosshead position detector which detects a position of the crosshead 151 and the crosshead speed detector which detects a speed of the crosshead 151 are not limited to the mold clamping motor encoder 161, and a general one can be used. In addition, a movable platen position detector which detects a position of the movable platen 120 and a movable platen speed detector which detects a speed of the movable platen 120 are not limited to the mold clamping motor encoder 161, and general one can be used.

In the mold clamping process, the mold clamping motor 160 is further driven to further move the crosshead 151 forward from the mold closing completion position to a mold clamping position, and thus, a mold clamping force is generated. When the mold is clamped, a cavity space 14 is formed between the movable mold 12 and the stationary mold 11, and the cavity space 14 is filled with a liquid molding material by the injection unit 300. A filled molding material is solidified, and thus, a molding product is obtained. A plurality of cavity spaces 14 may be provided, and in this case, a plurality of molding products maybe simultaneously obtained.

In the mold opening process, the mold clamping motor 160 is driven to move the crosshead 151 rearward to a mold opening completion position at a set speed. Accordingly, the movable platen 120 is moved rearward, and the movable mold 12 is moved away from the stationary mold 11. Thereafter, the ejector unit 200 ejects the molding product from the movable mold 12.

Setting conditions in the mold closing process and the mold clamping process are collectively set as a series of setting conditions. For example, the speed or positions (including a mold closing/opening start position, a speed switching position, a mold closing completion position, and a mold clamping position) of the crosshead 151 and a mold clamping force in the mold closing process and the mold clamping process are collectively set as a series of setting conditions. The mold closing/opening start position, the speed switching position, the mold closing completion position, and the mold clamping position are arranged in this order from the rear side toward the front side, and indicate a start point or an end point of a section in which the speed is set. The speed is set for each section. One speed switching position may be set or a plurality of speed switching positions may be set. The speed switching position may not be set. Any one of the mold clamping position and the mold clamping force may be set. In the mold opening process, the setting conditions may be similarly set. For example, the speed or the position (including a mold opening start position, a speed switching position, and a mold opening completion position) of the crosshead 151 in the mold opening process are collectively set as a series of setting conditions . The mold opening start position, the speed switching position, and the mold opening completion position are arranged in this order from the front side toward the rear side, and indicate a start point or an end point of a section in which the speed is set. The speed is set for each section. One speed switching position may be set or a plurality of speed switching positions may be set. The speed switching position may not be set. The mold opening start position and the mold clamping position may be the same as each other. In addition, the mold opening completion position and the mold closing/opening start position may be the same as each other.
In addition, instead of the speeds, the positions, or the like of the crosshead 151, a speed, a position, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 10 is changed by replacement of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 becomes a predetermined angle at the time of a mold touch where the movable mold 12 comes into contact with the stationary mold 11.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated. In addition, it is possible to rotate the plurality of screw nuts 182 individually by changing a transmission path of the rotation transmission portion 185.

For example, the rotation transmission portion 185 is configured of a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may be configured of a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 is rotatably held with respect to the toggle support 130 and the tie bar 140 in which the screw shaft 181 is formed is fixed to the stationary platen 110. However, the present invention is not limited to this.

For example, the screw nut 182 may be rotatably held with respect to the stationary platen 110 and the tie bar 140 may be fixed to the toggle support 130. In this case, the gap L can be adjusted by rotating the screw nut 182.

Moreover, the screw nut 182 maybe fixed to the toggle support 130 and the tie bar 140 may be rotatably held with respect to the stationary platen 110. In this case, the gap L can be adjusted by rotating the tie bar 140.

Moreover, the screw nut 182 may be fixed to the stationary platen 110 and the tie bar 140 may be rotatably held with respect to the toggle support 130. In this case, the gap L can be adjusted by rotating the tie bar 140.

The gap L is detected using a mold space adjustment motor encoder 184. The mold space adjustment motor encoder 184 detects a rotation amount or a rotation direction of the mold space adjustment motor 183 and sends signals indicating the detection results to the controller 700. The detection results of the mold space adjustment motor encoder 184 are used to monitor or control the position of the toggle support 130 or the gap L. In addition, a toggle support position detector which detects the position of the toggle support 130 and a gap detector which detects the gap L are not limited to the mold space adjustment motor encoder 184, and a general one may be used.

The mold space adjustment mechanism 180 rotates one of the screw shaft 181 and the screw nut 182 which are screwed to each other to adjust the gap L. A plurality of mold space adjustment mechanisms 180 maybe used, and a plurality of mold space adjustment motors 183 may be used.

Moreover, in order to adjust the gap L, the mold space adjustment mechanism 180 of the present embodiment includes the screw shaft 181 formed on the tie bar 140 and the screw nut 182 screwed to the screw shaft 181. However, the present invention is not limited to this.

For example, the mold space adjustment mechanism 180 may include a tie bar temperature controller which controls the temperature of the tie bar 140. The tie bar temperature controller is attached to each tie bar 140 and controls the temperatures of the plurality of tie bars 140. The tie bar 140 is lengthened by heat expansion and the gap L increases as the temperature of the tie bar 140 increases. The temperatures of the plurality of tie bars 140 can be adjusted independently.

For example, the tie bar temperature controller includes a heating source such as a heater and controls the temperature of the tie bar 140 by heating. The tie bar temperature controller may include a cooler such as a water cooling jacket and may control the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions. The vertical type mold clamping unit includes a lower platen, an upper platen, a toggle support, tie bars, a toggle mechanism, a mold clamping motor, or the like. Any one of the lower platen and the upper platen is used as a stationary platen and the other is used as a movable platen. A lower mold is attached to the lower platen and an upper mold is attached to the upper platen. The lower mold and the upper mold configure the mold unit. The lower mold may be attached to the lower platen via a rotary table. The toggle support is disposed below the lower platen and is connected to the upper platen via the tie bar. The upper platen and the toggle support are connected to each other in mold opening and closing directions by the tie bar with a gap therebetween. The toggle mechanism is disposed between the toggle support and the lower platen and lifts or lowers the movable platen. The mold clamping motor operates the toggle mechanism. In a case where the mold clamping unit is a vertical mold clamping unit, in general, the number of the tie bars is three. In addition, the number of the tie bars is not particularly limited.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### Ejector Unit

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is open is defined as the rear side.

The ejector unit 200 ejects the molding product from the mold unit 10. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can be moved forward or rearward through a through-hole of the movable platen 120. A front end portion of the ejector rod 230 comes into contact with a movable member 15 which is disposed to be movable forward or rearward inside the movable mold 12. The front end portion of the ejector rod 230 maybe connected to the movable member 15 or may not be connected to the movable member 15.

The ejector unit 200 performs an ejection process under the control of the controller 700.

In the ejection process, the ejector motor 210 is driven to move the ejector rod 230 forward from a standby position to an ejection position at a set speed, and thus, the movable member 15 is moved forward and the molding product is ejected. Thereafter, the ejector motor 210 is driven to move the ejector rod 230 rearward at a set speed, and thus, the movable member 15 is moved rearward to an original standby position. For example, a position or speed of the ejector rod 230 is detected using an ejector motor encoder 211. The ejector motor encoder 211 detects the rotation of the ejector motor 210 and sends signals indicating the detection results to the controller 700. In addition, an ejector rod position detector which detects the position of the ejector rod 230 and an ejector rod speed detector which detects the speed of the ejector rod 230 are not limited to the ejector motor encoder 211, and a general one can be used.

### Injection Unit

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame Fr, and is movable forward or rearward with respect to the mold unit 10. The injection unit 300 comes into contact with the mold unit 10, and thus, the cavity space 14 inside the mold unit 10 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed in a pellet shape and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 is provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 10. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 is moved rearward. Thereafter, if the screw 330 is moved forward, the liquid molding material accumulated in front of the screw 330 is injected from the nozzle 320 and the inside of the mold unit 10 is filled with the liquid molding material.

A back flow prevention ring 331 is attached to a front portion of the screw 330 to be movable forward or rearward as a backflow prevention valve which prevents a backflow of the molding material from the front side of the screw 330 toward the rear side when the screw 330 is pushed forward.

When the screw 330 is moved forward, the back flow prevention ring 331 is pushed toward the rear side by the pressure of the molding material in front of the screw 330 and is moved rearward relative to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and is moved forward relative to the screw 330 to an open position (refer to Fig. 1) at which the flow path of the molding material is open. Accordingly, the molding material is fed to the front side of the screw 330.

The back flow prevention ring 331 maybe either a co-rotation type ring which rotates together with the screw 330 or a non-co-rotation type ring which does not rotate together with the screw 330.

In addition, the injection unit 300 may include a drive source which moves the backflow prevention ring 331 forward or rearward relative to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder or the like, for example.

The pressure detector 360 detects a pressure transmitted between the injection motor 350 and the screw 330. The pressure detector 360 is provided on a pressure transmission path between the injection motor 350 and the screw 330 and detects a pressure applied to the pressure detector 360.

The pressure detector 360 sends signals indicating the detection results to the controller 700. The detection results of the pressure detector 360 are used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 is moved rearward as the liquid molding material is fed to the front side of the screw 330 and is accumulated in front of the cylinder 310. For example, the rotating speed of the screw 330 is detected using a plasticizing motor encoder 341. The plasticizing motor encoder 341 detects the rotation of the plasticizing motor 340 and sends signals indicating the detection results to the controller 700. In addition, a screw rotating speed detector which detects the rotating speed of the screw 330 is not limited to the plasticizing motor encoder 341, and a general one can be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends signals indicating the detection results to the controller 700. If the screw 330 is moved rearward to a plasticizing completion position and a predetermined amount of the molding materials is accumulated in front of the screw 330, the plasticizing process is completed.

In the filling process, the injection motor 350 is driven to move the screw 330 forward at a set speed, and the cavity space 14 inside the mold unit 10 is filled with the liquid molding material accumulated in front of the screw 330. For example, a position or speed of the screw 330 is detected using an injection motor encoder 351. The injection motor encoder 351 detects the rotation of the injection motor 350 and sends signals indicating the detection results to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may be moved forward or maybe moved rearward at a very slow speed. In addition, a screw position detector which detects the position of the screw 330 and a screw speed detector which detects the speed of the screw 330 are not limited to the injection motor encoder 351, and a general one can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 10. Insufficient molding materials can be replenished by cooling shrinkage in the mold unit 10. For example, the holding pressure is detected using the pressure detector 360. The pressure detector 360 sends signals indicating the detection results to the controller 700. A set value of the holding pressure may be changed according to an elapsed time from the starting of the holding pressure process, or the like.

In the holding pressure process, the molding material inside the cavity space 14 in the mold unit 10 is gradually cooled, and when the holding pressure process is completed, an inlet of the cavity space 14 is closed by the molding material which is solidified. This state is referred to as a gate seal, and a backflow of the molding material from the cavity space 14 is prevented. After the holding pressure process, a cooling process starts. In the cooling process, solidification of the molding material in the cavity space 14 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies molten molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### Movement Unit

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 10. In addition, the movement unit 400 presses the nozzle 320 to the mold unit 10 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can be rotated in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction and by rotation torque corresponding to the control signals from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 is moved forward, and thus, the nozzle 320 is pressed to the stationary mold 11. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 is moved rearward and thus, the nozzle 320 is moved away from the stationary mold 11.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### Controller

For example, as shown in Figs. 1 and 2, the controller 700 is configured of a computer and includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like during the mold clamping process. A series of operations to obtain the molding product, for example, an operation from the start of the plasticizing process to the start of the next plasticizing process is referred to as "shot" or a "molding cycle". In addition, a time required for once shot is also referred to as a "molding cycle time". For example, a single molding cycle includes the plasticizing process, the mold closing process, the mold clamping process, the filling process, the holding pressure process, a cooling process, a mold opening process, and an ejection process in this order. Here, the order is the order of the start of each process. The filling process, holding pressure process, and cooling process are performed from the start of the mold clamping process to the end of the mold clamping process. The end of the mold clamping process coincides with the start of the mold opening process. In addition, in order to shorten the molding cycle time, a plurality of steps may be carried out at the same time. For example, the plasticizing process maybe performed during the cooling process of the previous molding cycle, and in this case, the mold closing process may be performed at the beginning of the molding cycle. In addition, the filling process may start during the mold closing process. Moreover, the ejection process may start during the mold opening process. In the case where an on/off valve which opens and closes a flow path of the nozzle 320 is provided, the mold opening process may start during the plasticizing process. Even when the mold opening process starts during the plasticizing process, if the on/off valve closes the flow path of the nozzle 320, the molding material does not leak from the nozzle 320.

The controller 700 is connected to an operation unit 750 or the display unit 760. The operation unit 750 receives an input operation from a user and outputs signals corresponding to the input operation to the controller 700. The display unit 760 displays an operation screen corresponding to the input operation of the operation unit 750 under the control of the controller 700.

The operation screen is used for the setting of the injection molding machine 1 or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine 1 or the like.

For example, the operation unit 750 and the display unit 760 may be configured of a touch panel to be integrated with each other. In addition, in the present embodiment, the operation unit 750 and the display unit 760 are integrated with each other. However, the operation unit 750 and the display unit 760 may be provided to be independent to each other. In addition, a plurality of operation units 750 may be provided.

### First Embodiment

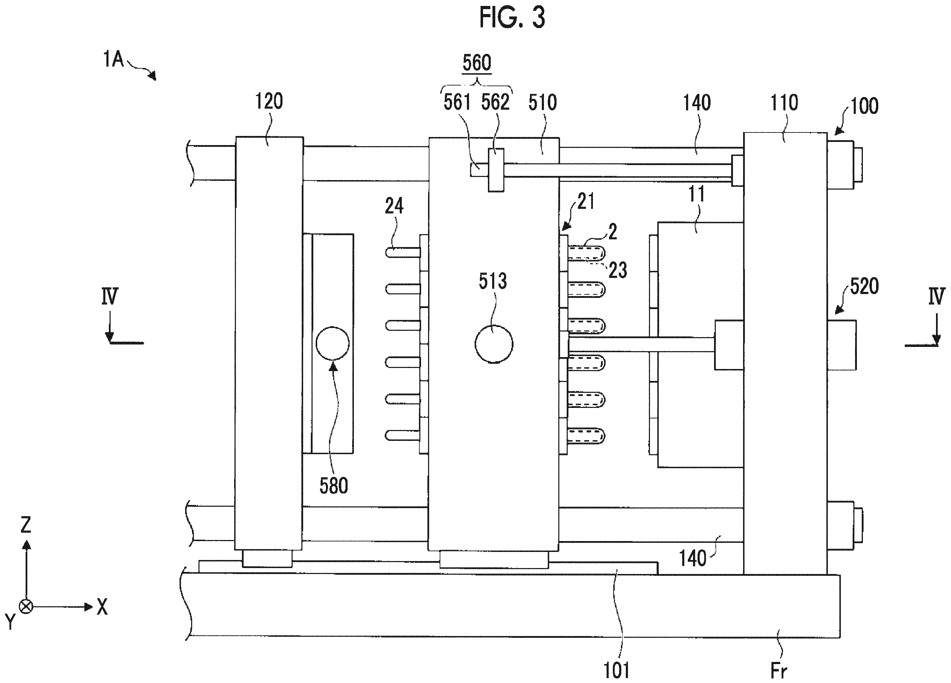

A first embodiment will be described with reference to Figs. 3 to 9. In the first embodiment, the mold clamping unit 100 of the elements of the injection molding machine 1 shown in Figs. 1 and 2 is replaced with a mold clamping unit for injection blow molding. Hereinafter, a configuration of a mold clamping unit 100 for injection blow molding included in an injection molding machine 1A according to the first embodiment will be described.

### Injection Blow Molding

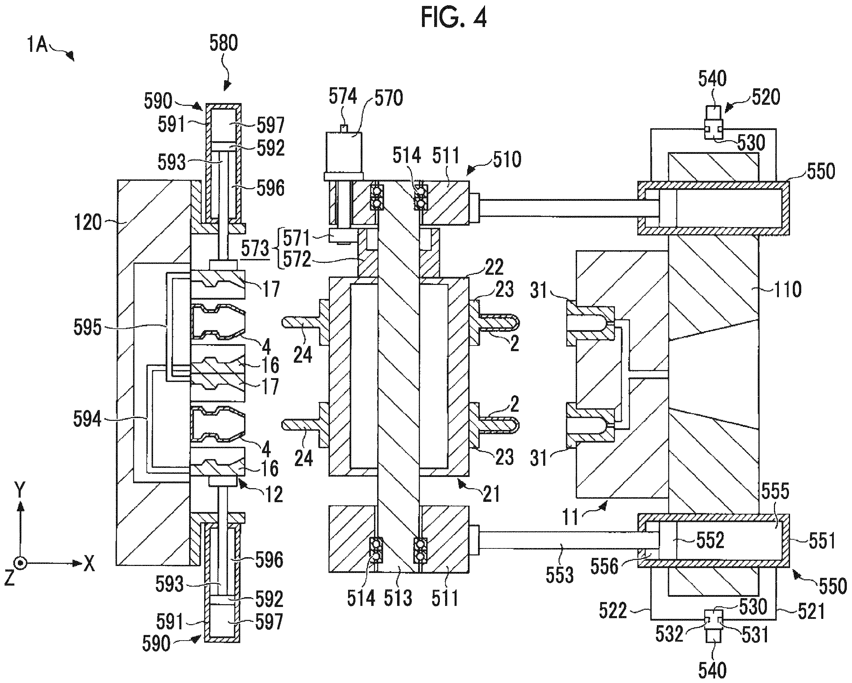

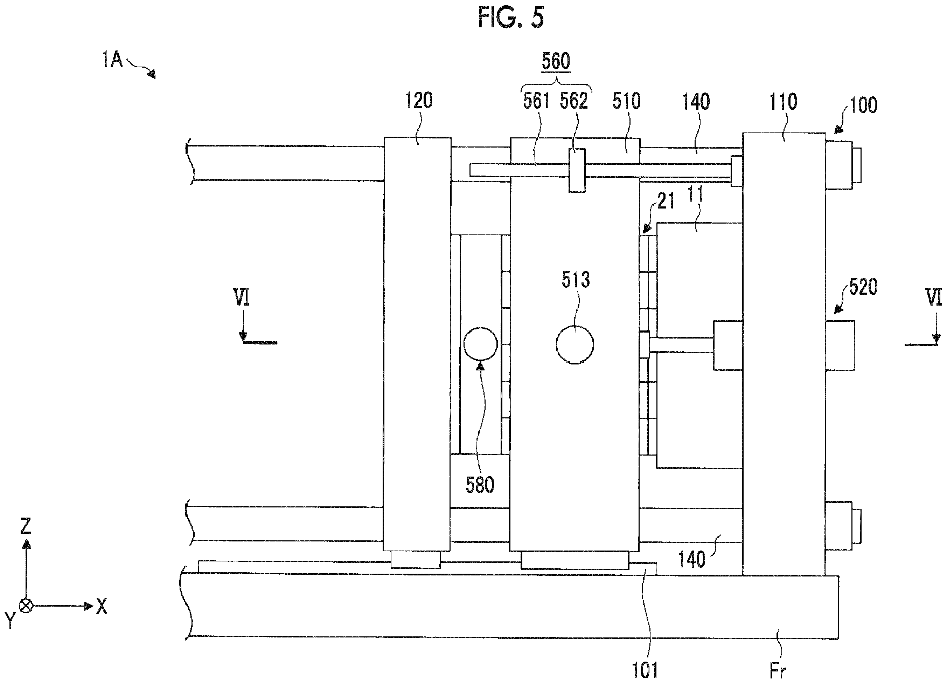

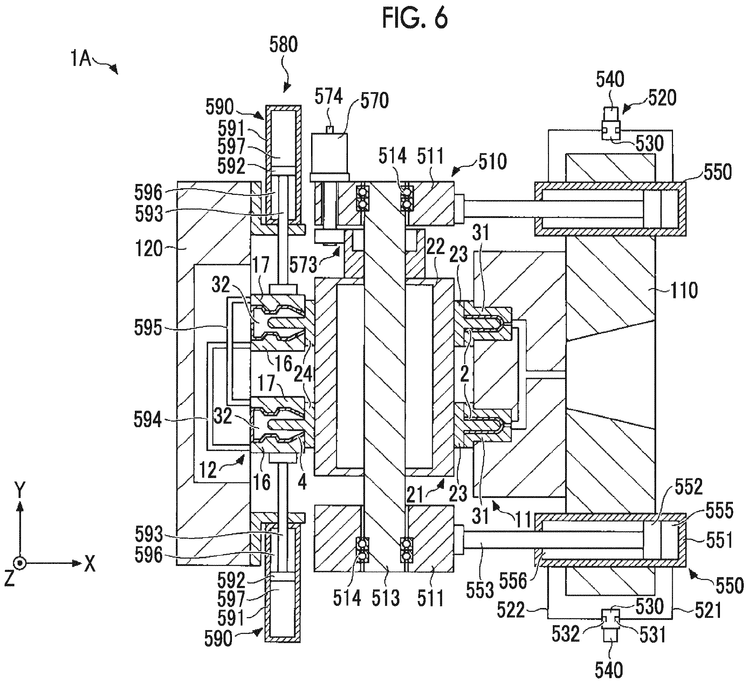

Fig. 3 is a view showing a state when a mold opening of the mold clamping unit according to the first embodiment is completed. Fig. 4 is a sectional view taken along line IV-IV of Fig. 3. Fig. 5 is a view showing a state when a mold of the mold clamping unit according to the first embodiment is clamped. Fig. 6 is a sectional view taken along line VI-VI of Fig. 5.

For example, the mold clamping unit 100 includes an intermediate mold support frame 510 which is disposed between the stationary platen 110 and the movable platen 120 and an intermediate mold movement unit 520 which moves the intermediate mold support frame 510 with respect to the stationary platen 110 so as to move an intermediate mold 21 supported by the intermediate mold support frame 510. In addition, the mold clamping unit 100 includes a mold rotating motor 570 which rotates the intermediate mold 21 supported by the intermediate mold support frame 510. Moreover, the mold clamping unit 100 includes a split mold opening/closing unit 580 which opens and closes a first split mold 16 and a second split mold 17 constituting the movable mold 12.

The stationary platen 110 may be fixed to the frame Fr. The stationary mold 11 is attached to a mold attachment surface of the stationary platen 110. As shown in Fig. 6, the stationary mold 11 includes a plurality of recessed mold portions 31 which form a cavity space for injection molding in cooperation with the intermediate mold 21. Six recessed mold portions 31 for injection molding are arranged in the Z direction to form rows, and two rows are arranged with a gap in the Y direction. In addition, the number of recessed mold portions 31 for injection molding is not particularly limited.

The movable platen 120 is movable forward or rearward along the guide 101 placed on the frame Fr. The movable mold 12 is attached to a mold attachment surface of the movable platen 120. For example, the movable mold 12 includes the first split mold 16 and the second split mold 17. As shown in Fig. 6, the first split mold 16 and the second split mold 17 include a plurality of recessed mold portions 32 which form a cavity space for blow molding in cooperation with the intermediate mold 21 in a closed state. Six recessed mold portions 32 for blow molding are arranged in the Z direction to form rows, each row is configured of a pair of first split mold 16 and second split mold 17, and two pairs of first split mold 16 and second split mold 17 are provided with a gap in the Y direction. The number of recessed mold portions 32 for blow molding is not particularly limited.

The intermediate mold support frame 510 is disposed between the stationary platen 110 and the movable platen 120 and is movable forward or rearward along the guide 101 independently of the movable platen 120. The intermediate mold support frame 510 rotatably supports the intermediate mold 21.

The intermediate mold support frame 510 is formed in a rectangular frame shape when viewed in the mold opening and closing directions. Through-holes which penetrate the intermediate mold support frame 510 in the X direction are formed at four corners of the intermediate mold support frame 510, and the tie bars 140 are inserted into the through-holes. The intermediate mold support frame 510 is movable forward or rearward along the tie bars 140.

The intermediate mold support frame 510 includes a pair of pillar portions 511, each of which extends in the Z direction, and a pair of beam portions which connects both end portions of the pair of pillar portions 511 in the Z direction to each other. Each of the pair of pillar portions 511 holds a bearing 514 which rotatably supports a rotary shaft 513 in a center portion in the Z direction. An axial direction of the rotary shaft 513 is the Y direction, the intermediate mold 21 is fixed to the rotary shaft 513, and the intermediate mold 21 is rotated together with the rotary shaft 513.

The intermediate mold 21 includes a plate-shaped portion 22 which is formed in a plate shape when viewed in the axial direction (when viewed in the Y direction) of the rotary shaft 513, a first protruding mold portion 23 which is provided on one principal surface of the plate-shaped portion 22, and a second protruding mold portions 24 which is provided on the remaining principal surface of the plate-shaped portion 22. The first protruding mold portions 23 and the second protruding mold portions 24 are disposed symmetrically in a state where the plate-shaped portion 22 is interposed therebetween. In the first protruding mold portions 23, the number of the recessed mold portions 31 for injection molding is the same as the number of the recessed mold portions 32 for blow molding. Similarly, the number of the second protruding mold portions 24 is the same as the number of the recessed mold portions 31 for injection molding or the number of the recessed mold portions 32 for blow molding.

When the first protruding mold portions 23 face the recessed mold portions 31 for injection molding, the second protruding mold portions 24 face the recessed mold portions 32 for blow molding. In addition, when the first protruding mold portions 23 face the recessed mold portions 32 for blow molding, the second protruding mold portions 24 face the recessed mold portions 31 for injection molding. Every time the intermediate mold 21 is rotated by 180°, the combination of the facing molds is changed.

Moreover, in the present embodiment, the protruding mold portions are provided in the intermediate mold 21 and the recessed mold portions are provided in the stationary mold 11 and the movable mold 12. However, the disposition of protruding mold portions and recessed mold portions may be reversed. That is, the protruding mold portions may be provided in the stationary mold 11 and the movable mold 12, and the recessed mold portions may be provided in the intermediate mold 21.

The intermediate mold movement unit 520 moves the intermediate mold support frame 510 in the X direction so as to move the intermediate mold 21 in the X direction. As shown in Figs. 4 and 6, the intermediate mold movement unit 520 includes an intermediate mold movement pump 530, an intermediate mold movement motor 540, an intermediate mold movement cylinder 550, or the like. Two sets of the intermediate mold movement pump 530, the intermediate mold movement motor 540, and the intermediate mold movement cylinder 550 are provided. In addition, the intermediate mold movement pump 530 and the intermediate mold movement motor 540 may be common to the two intermediate mold movement cylinders 550 or may be provided one by one.

The intermediate mold movement pump 530 has a first port 531 and a second port 532. The intermediate mold movement pump 530 is a pump which can be rotated in both directions, and switches a rotation direction of the intermediate mold movement motor 540 such that the working liquid (for example, oil) is sucked from one of the first port 531 and the second port 532 and is discharged from the other thereof so as to generate a liquid pressure. In addition, the intermediate mold movement pump 530 can draw the working liquid from a tank and discharge the working liquid from any one of the first port 531 and the second port 532.

The intermediate mold movement motor 540 operates the intermediate mold movement pump 530. The intermediate mold movement motor 540 drives the intermediate mold movement pump 530 in the rotation direction and by the rotation torque according to the control signal from the controller 700. The intermediate mold movement motor 540 may be an electric motor or may be an electric servomotor.

The intermediate mold movement cylinder 550 includes a cylinder body 551, a piston 552, and a piston rod 553. The piston rod 553 extends in the X direction from the cylinder body 551 and is fixed to the center portion of the pillar portion 511 of the intermediate mold support frame 510 in the Z direction at a tip portion of the piston rod 553. The cylinder body 551 is fixed to the stationary platen 110. The piston 552 partitions the inside of the cylinder body 551 into a front chamber 555 which is a first chamber and a rear chamber 556 which is a second chamber.

The front chamber 555 of the intermediate mold movement cylinder 550 is connected to the first port 531 of the intermediate mold movement pump 530 via a first flow path 521. The working liquid discharged from the first port 531 is supplied to the front chamber 555 via the first flow path 521, and thus, the intermediate mold support frame 510 is pushed backward. As a result, the intermediate mold support frame 510 moves rearward and the intermediate mold 21 is moved away from the stationary mold 11.

Meanwhile, the rear chamber 556 of the intermediate mold movement cylinder 550 is connected to the second port 532 of the intermediate mold movement pump 530 via a second flow path 522. The working liquid discharged from the second port 532 is supplied to the rear chamber 556 of the intermediate mold movement cylinder 550 via the second flow path 522, and thus, the intermediate mold support frame 510 is pushed forward. As a result, the intermediate mold support frame 510 moves forward and the intermediate mold 21 is pressed to the stationary mold 11.

For example, the position of the intermediate mold 21 in the X direction with respect to the stationary mold 11 is detected by a linear encoder 560 (refer to Figs. 3 and 5). The linear encoder 560 includes a linear scale 561 which extends in the X direction and a linear head 562 which detects a displacement amount with respect to the linear scale 561. The linear scale 561 is fixed to the stationary platen 110 at a front end of the linear scale 561 and the linear head 562 is fixed to the intermediate mold support frame 510. The arrangement of the linear scale 561 and the linear head 562 may be reversed. That is, the linear scale 561 may be fixed to the intermediate mold support frame 510 at a rear end thereof, and the linear head 562 may be fixed to the stationary platen 110. The linear head 562 sends signals indicating detection results to the controller 700.

In addition, in this embodiment, the intermediate mold movement unit 520 includes the intermediate mold movement cylinder 550. However, the present invention is not limited thereto. For example, instead of the intermediate mold movement cylinder 550, an electric motor and a motion conversion mechanism which converts a rotary motion of the electric motor into a linear motion of the intermediate mold support frame 510 may be used.

The mold rotating motor 570 rotates the intermediate mold 21 which is supported by the intermediate mold support frame 510. For example, the mold rotating motor 570 is provided in the pillar portion 511 of the intermediate mold support frame 510. A drive gear 571 provided on an output shaft of the mold rotating motor 570 and a driven gear 572 provided in the rotary shaft 513 are meshed with each other. The drive gear 571 and the driven gear 572 configure a speed reducer 573. The rotary motion of the mold rotating motor 570 is transmitted to the rotary shaft 513 via the speed reducer 573. In addition, the configuration of the speed reducer 573 is not particularly limited. In addition, the rotary motion of the mold rotating motor 570 may be transmitted to the rotary shaft 513 via a belt or a pulley.

A mold rotating motor encoder 574 functions as a rotation angle detector which detects a rotation angle of the intermediate mold 21. The mold rotating motor encoder 574 detects the rotation of the output shaft of the mold rotating motor 570 and sends signals indicating the detection results to the controller 700. The controller 700 performs a servo control of the mold rotating motor 570 such that a detection value of the rotation angle of the intermediate mold 21 becomes a predetermined rotation angle (for example, 0° or 180°). When the intermediate mold 21 is rotated by 180°, the output shaft of the mold rotating motor 570 may rotate more than 180°. The rotation angle of the intermediate mold 21 is obtained from the rotation angle of the output shaft of the mold rotating motor 570, the reduction ratio, or the like.

The split mold opening/closing unit 580 opens and close the first split mold 16 and the second split mold 17 constituting the movable mold 12. For example, the split mold opening/closing unit 580 includes a pair of liquid pressure cylinders 590 which is provided in the movable platen 120. The pair of liquid pressure cylinders 590 is the center portion of the movable platen 120 in the Z direction and is symmetrically disposed with a gap in the Y direction. The pair of liquid pressure cylinders 590 is provided so as to face each other.

Each liquid pressure cylinder 590 includes a cylinder body 591 which is fixed to the movable platen 120, a piston 592 which partitions the inside of the cylinder body 591 into a front chamber 596 (second chamber) and a rear chamber 597 (first chamber), and a piston rod 593 which penetrates the front chamber 596 from the piston 592 inside the cylinder body 591 to extend in the Y direction. An external tip portion of one piston rod 593 is fixed to one of the plurality of first split molds 16 which are connected to each other by a first connection member 594. An external tip portion of the other piston rod 593 is fixed to one of the plurality of second split molds 17 which are connected to each other by a second connection member 595. If each liquid pressure cylinder 590 is operated using a liquid pressure circuit 600 described later, the first split mold 16 and the second split mold 17 are opened and closed.

Next, an operation of the mold clamping unit 100 having the above-described configuration will be described. The mold clamping unit 100 performs the mold closing process, the mold clamping process, the mold opening process, a split mold opening/closing process, an intermediate mold rotating process, or the like under the control by the controller 700.

In the mold closing process, the mold clamping motor 160 is driven to move the crosshead 151 forward to the mold closing completion position at a set speed. Accordingly, the movable platen 120 is moved forward and moves the movable mold 12 close to the stationary mold 11. In this case, the intermediate mold movement unit 520 moves the intermediate mold support frame 510 forward and moves the intermediate mold 21 close to the stationary mold 11. The movable mold 12 comes into contact with the intermediate mold 21 and the intermediate mold 21 comes into contact with the stationary mold 11.

Subsequently, in the mold clamping process, the mold clamping motor 160 is further driven to move the crosshead 151 forward from the mold clamping completion position to the mold closing completion position, and thus, a mold clamping force is generated. In Fig. 6, the cavity space for injection molding is formed between the recessed mold portions 31 of the stationary mold 11 and the first protruding mold portions 23 of the intermediate mold 21. In addition, in Fig. 6, the cavity space for blow molding is formed between the recessed mold portions 32 of the movable mold 12 and the second protruding mold portions 24 of the intermediate mold 21.

The cavity space for injection molding is filled with the molding material, and a preform 2 is injection-molded in the cavity space. Meanwhile, in the cavity space for injection molding, the preform 2 which is injection-molded in the cavity space for blow molding in advance, is expanded by a pressure of a compressed air, and the molding product 4 is blow-molded. The compressed air expanding the preform 2 is injected from the intermediate mold 21, and thus, the blow-molded molding product 4 is separated from the intermediate mold 21. The injection molding of the preform 2 and the blow molding of the molding product 4 are simultaneously performed.

Subsequently, in the mold opening process, themoldclamping motor 160 is driven to move the crosshead 151 rearward to the mold opening completion position at a set speed. Accordingly, the movable platen 120 is moved rearward, and thus, the movable mold 12 is moved away from the stationary mold 11. In this case, the intermediate mold movement unit 520 moves the intermediate mold support frame 510 rearward, and thus, the intermediate mold 21 is moved away from the stationary mold 11. The movable mold 12 is moved away from the intermediate mold 21, and the intermediate mold 21 is moved away from the stationary mold 11. During this time, the intermediate mold 21 holds the preform 2 before the blow molding.

Subsequently, in the split mold opening/closing process, the split mold opening/closing unit 580 opens the first split mold 16 and the second split mold 17. Thereafter, if the molding product 4 is extracted from the inside of the movable mold 12, the split mold opening/closing unit 580 closes the first split mold 16 and the second split mold 17. For example, the first split mold 16 and the second split mold 17 are closed before the blow molding.

Subsequently, in the intermediate mold rotating process, the mold rotating motor 570 is driven to rotate the intermediate mold 21 by 180°. Accordingly, the recessed mold portions 31 for injection molding and the recessed mold portions 32 for blow molding face each other, and the combinations of the first protruding mold portions 23 and the second protruding mold portions 24 are changed. While the intermediate mold 21 is rotated by 180°, the intermediate mold 21 holds the preform 2 before blow molding.

In addition, the intermediate mold rotating process may be performed simultaneously with the split mold opening/closing process or may be performed before the split mold opening/closing process. The intermediate mold rotating process may be performed at any time as long as it is performed after the mold opening process is completed and before the next mold closing process starts.

Thereafter, the controller 700 repeatedly performs the mold closing process, the mold clamping process, the mold opening process, the split mold opening/closing process, the intermediate mold rotating process, or the like.

### Liquid Pressure Circuit of Split Mold Opening/Closing Unit

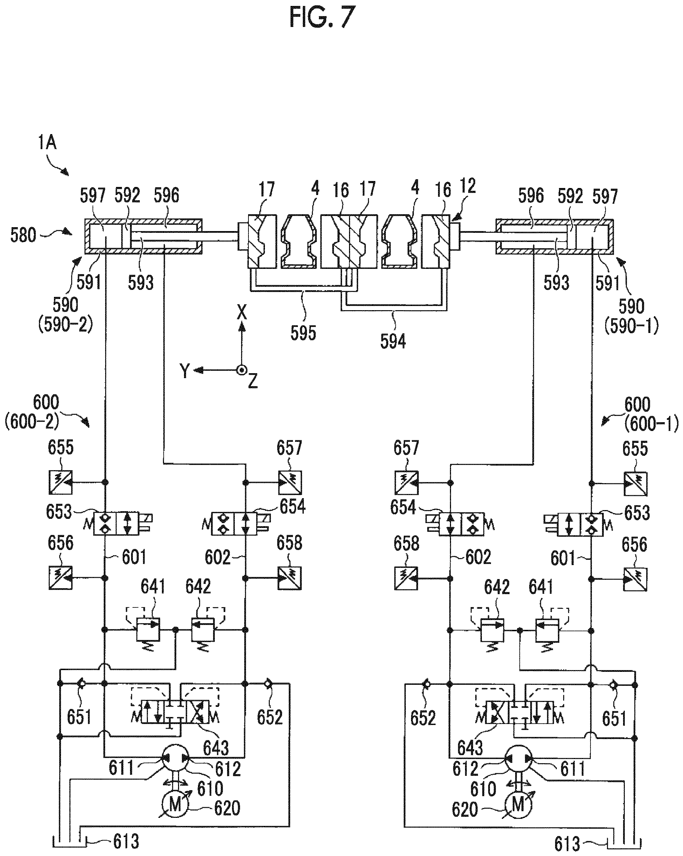

Fig. 7 is a view showing a configuration of the liquid pressure circuit 600 of the split mold opening/closing unit 580 according to the first embodiment. As shown Fig. 7, the split mold opening/closing unit 580 includes the pair of liquidpressure circuits 600 as an operating unit for operating the liquid pressure cylinders 590. One liquid pressure circuit 600 controls the operation of one liquid pressure cylinder 590, and the other liquid pressure circuit 600 controls the operation of the other liquid pressure cylinder 590. Each liquid pressure circuit 600 includes a liquid pressure pump 610, a motor 620 which is a drive source, or the like.

The liquid pressure pump 610 includes a first port 611 and a second port 612. The liquid pressure pump 610 is a pump which can be rotated in both directions, and switches the rotation direction of the motor 620 such that the working liquid (for example, oil) is sucked from one of the first port 611 and the second port 612 and is discharged from the other thereof so as to generate a liquid pressure. In addition, the liquid pressure pump 610 can draw the working liquid from a tank 613 and discharge the working liquid from any one of the first port 611 and the second port 612.

The motor 620 operates the liquid pressure pump 610. The motor 620 drives the liquid pressure pump 610 in the rotation direction and by the rotation torque according to the control signal from the controller 700. The motor 620 may be an electric motor or may be an electric servomotor.

The rear chamber 597 of the liquid pressure cylinder 590 is connected to the first port 611 of the liquid pressure pump 610 via a first flow path 601. The working liquid discharged from the first port 611 is supplied to the rear chamber 597 via the first flow path 601 (flow path), and thus, the first split mold 16 and the second split mold 17 of the movable mold 12 are closed.

Meanwhile, the front chamber 596 of the liquid pressure cylinder 590 is connected to the second port 612 of the liquid pressure pump 610 via a second flow path 602 (flow path) . The working liquid discharged from the second port 612 is supplied to the front chamber 596 of the liquid pressure cylinder 590 via the second flow path 602, and thus, the first split mold 16 and the second split mold 17 of the movable mold 12 are opened.

A first relief valve 641 is opened in a case where a pressure in the first flow path 601 exceeds a set value and returns an excess working liquid in the first flow path 601 to a tank 613 such that the pressure in the first flow path 601 is maintained to be equal to or less than the set value.

A second relief valve 642 is opened in a case where a pressure in the second flow path 602 exceeds a set value and returns an excess working liquid in the second flow path 602 to a tank 613 such that the pressure in the second flow path 602 is maintained to be equal to or less than the set value.

The flushing valve 643 is a valve which adjusts an excess or deficiency of a circulation amount of the working liquid due to a difference between a cross-sectional area of the front chamber 596 and a cross-sectional area of the rear chamber 597, and for example, as shown in Fig. 7, the flushing valve 643 is configured of a three-position/four-port spool valve.

A first check valve 651 is opened in a case where the pressure in the first flow path 601 is lower than the pressure in the tank 613 to supply the working liquid from the tank 613 to the first flow path 601.

A second check valve 652 is opened in a case where the pressure in the second flow path 602 is lower than the pressure in the tank 613 to supply the working liquid from the tank 613 to the second flow path 602.

A first electromagnetic switching valve 653 (flow path opening/closing unit) is a control valve which controls the flow of working liquid between the rear chamber 597 of the liquid pressure cylinder 590 and the first port 611 of the liquid pressure pump 610. For example, the first electromagnetic switching valve 653 is provided in the intermediate of the first flow path 601 and controls the flow of the working liquid in the first flow path 601.

For example, as shown in Fig. 7, the first electromagnetic switching valve 653 is configured of a two-position/two-port spool valve. In a case where the spool valve is in a first position (the position on the right side in Fig. 7), the state is an open state in which the flows in both directions between the rear chamber 597 and the first port 611 are permitted. Meanwhile, in a case where the spool valve is in a second position (the position on the left side in Fig. 7), the closed state is restricted in which the flows in both directions between the rear chamber 597 and the first port 611 is restricted.

A first pressure detector 655 detects a liquid pressure of the rear chamber 597. For example, the first pressure detector 655 is provided in the intermediate of the first flow path 601 and is provided at a position on the side of the rear chamber 597 with respect to the first electromagnetic switching valve 653. Regardless of the state of the first electromagnetic switching valve 653, the liquid pressure of the rear chamber 597 can be detected.

A second pressure detector 656 is provided in the intermediate of the first flow path 601 and is provided at a position on the side of the first port 611 with respect to the first electromagnetic switching valve 653. The second pressure detector 656 detects a liquid pressure between the first electromagnetic switching valve 653 and the first port 611. The first electromagnetic switching valve 653 is in the open state in which the flows in both directions between the first port 611 and the rear chamber 597 are allowed, the liquid pressure between the first port 611 and the first electromagnetic switching valve 653 is the same as the liquid pressure between the first electromagnetic switching valve 653 and the rear chamber 597.

A second electromagnetic switching valve 654 (flow path opening/closing unit) is a control valve which controls the flow of working liquid between the front chamber 596 of the liquid pressure cylinder 590 and the second port 612 of the liquid pressure pump 610. For example, the second electromagnetic switching valve 654 is provided in the intermediate of the second flow path 602 and controls the flow of the working liquid in the second flow path 602.

For example, as shown in Fig. 7, similarly to the first electromagnetic switching valve 653, the second electromagnetic switching valve 654 is configured of a two-position/two-port spool valve.

A third pressure detector 657 detects the liquid pressure of the front chamber 596. For example, the third pressure detector 657 is provided in the intermediate of the second flow path 602 and is provided at a position on the side of the front chamber 596 with respect to the second electromagnetic switching valve 654. Regardless of the state of the second electromagnetic switching valve 654, the liquid pressure of the front chamber 596 can be detected.

A fourth pressure detector 658 is provided in the intermediate of the second flow path 602 and is provided at a position on the side of the second port 612 with respect to the second electromagnetic switching valve 654. The fourth pressure detector 658 detects a liquid pressure between the second electromagnetic switching valve 654 and the second port 612. The second electromagnetic switching valve 654 is in the open state in which the flows in both directions between the second port 612 and the front chamber 596 are allowed, the liquidpressure between the second port 612 and the second electromagnetic switching valve 654 is the same as the liquid pressure between the second electromagnetic switching valve 654 and the front chamber 596.

### Split Mold Opening Control by Liquid Pressure Circuit

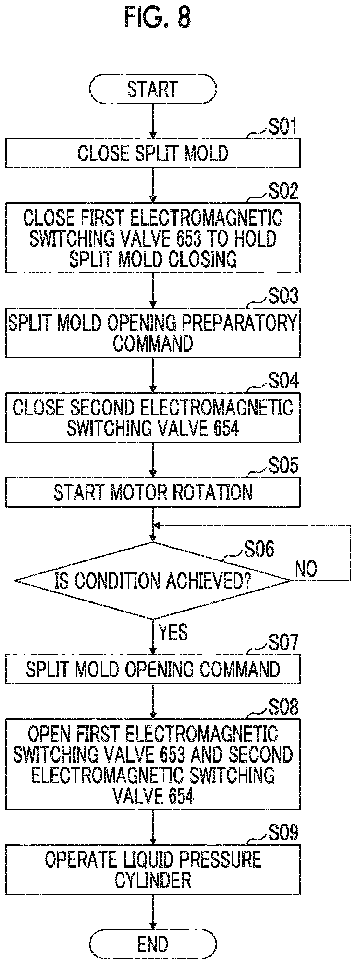

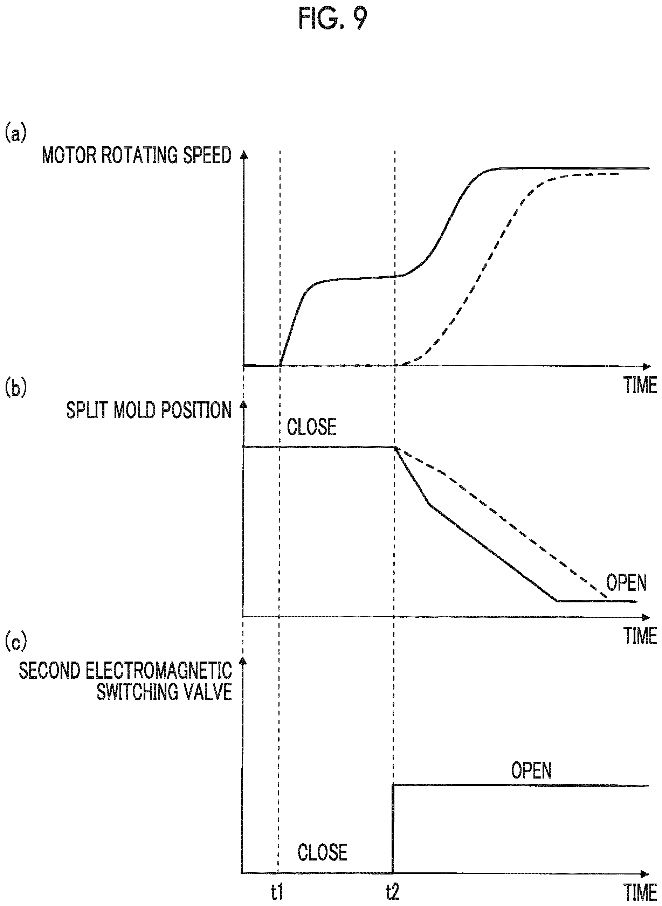

Fig. 8 is a flowchart of a split mold opening control performed by the liquid pressure circuit in the first embodiment. Fig. 9 is a time-chart of the split mold opening control. In the first embodiment, when the first split mold 16 and the second split mold 17 of the movable mold 12 are opened, the split mold opening control is performed using the liquid pressure circuit 600 of the split mold opening/closing unit 580 in order to quicken the rising of the opening operation.

Hereinafter, the split mold opening control will be described with reference to the time-chart of Fig. 9 along the flowchart of Fig. 8. In Fig. 9, when the split mold opening control of Fig. 8 is performed, a rotating speed (motor rotating speed) of the motor 620 of the liquid pressure circuit 600, positions (split mold positions) of the first split mold 16 and the second split mold 17 of the movable mold 12, and the state of the second electromagnetic switching valve 654 are shown. (a) of Fig. 9 is the motor rotating speed, (b) of Fig. 9 is the split mold positions, and (c) of Fig. 9 is a graph of the second electromagnetic switching valve 654. In the motor rotating speed and the split mold position, time transitions of the present embodiment are indicated by solid lines, and time transitions of Comparative Example in which the split mold opening control of the present embodiment is not performed (the liquid pressure is not raised in advance before the opening operation of the split mold starts) are indicated by dotted lines. In addition, in Fig. 9, in both the present embodiment and Comparative Example, the timing is unified so that a split mold opening command is issued at time t2.

First, as a preliminary step of the split mold opening control, in Step S01, the first split mold 16 and the second split mold 17 of the movable mold 12 are closed by the split mold opening/closing unit 580. In order to close the split molds, both the first electromagnetic switching valve 653 and the second electromagnetic switching valve 654 of the liquid pressure circuit 600 are controlled to be in an open state, and the rear chamber 597 of the liquid pressure cylinder 590 is connected to the first port 611 of the liquid pressure pump 610 via the first flow path 601. In this state, the working liquid discharged from the first port 611 of the liquid pressure pump 610 is supplied to the rear chamber 597 via the first flow path 601, and thus, the piston rod 593 protrudes outward and the split molds of the movable mold 12 are closed. In Step S02, if the split molds are closed, the first electromagnetic switching valve 653 is switched to the closed state, the liquid pressure of the rear chamber 597 of the liquid pressure cylinder 590 is maintained, and the closed state of the split mold is held.

Next, in Step S03, if a split mold opening preparatory command is issued, first, in Step S04, the second electromagnetic switching valve 654 is switched to the closed state. For example, the split mold opening preparatory command can be set according to a back calculation from the timing of the split mold opening command described later. In Fig. 9, at time t1, the state reaches the state of Step S04, the motor rotating speed is 0, the split mold position is a closedposition, and the second electromagnetic switching valve 654 is closed.

In Step S05, the rotation of the motor 620 starts, and thus, the working liquid starts to be discharged from the second port 612 of the liquid pressure pump 610. In addition, since the second electromagnetic switching valve 654 is in the closed state, the working liquid of the second flow path 602 is not supplied to the front chamber 596 of the liquid pressure cylinder 590 and the liquid pressure of the second flow path 602 between the second port 612 and the second electromagnetic switching valve 654 increases.

In Step S06, it is determined whether or not a predetermined condition is achieved after starting the motor 620. The predetermined condition is information indicating that the liquid pressure of the working liquid for operating the split mold is sufficiently increased in advance before being supplied to the liquid pressure cylinder 590. For example, a condition in which a predetermined time is elapsed after the start of the motor 620, or a condition in which a liquid pressure on an upstream side (on the side of the motor 620) of the second electromagnetic switching valve 654 exceeds a predetermined threshold value, or the like can be set as the predetermined condition. For example, the upstream side liquid pressure is detected by the fourth pressure detector 658. In a case where the predetermined condition is not achieved after the start of the motor 620 as a determination result of Step S06, the second electromagnetic switching valve 654 is closed and the state of operating the motor 620 is continued until the predetermined condition is satisfied.

Meanwhile, in a case where the predetermined condition is achieved after the start of the motor 620 in Step S06, it can be determined that the liquid pressure of the working liquid for operating the split mold is sufficiently increased in advance before being supplied to the liquid pressure cylinder 590. Accordingly, in Step S07, the split mold opening command for opening the first split mold 16 and the second split mold 17 of the movable mold 12 is issued, and in Step S08, the first electromagnetic switching valve 653 and the second electromagnetic switching valve 654 are switched to the open states. For example, the split mold opening command can be set to satisfy the predetermined condition of Step S06 and to output after a predetermined period is elapsed from the split mold opening preparatory command or at a predetermined split mold opening timing.

In Fig. 9, during the period from the time t1 to the time t2, the predetermined condition of Step S06 is not achieved, and the rotating speed of the motor 620 gradually increases in a state where the second electromagnetic switching valve 654 is in the closed state. In addition, since the supply of working liquid to the front chamber 596 of the liquid pressure cylinder 590 is closed, the split mold position is the position of the closed state. Moreover, at a time before the time t2, the predetermined condition of Step S06 is achieved, a split mold opening command is issued at the time t2, and the second electromagnetic switching valve 654 is switched to the open state . Meanwhile, in Comparative Example, the motor 620 is not operated during the period from the time t1 to the time t2, and the motor 620 starts in response to the split mold opening command issued at the time t2. Since the motor rotating speed starts to increase from 0 at the time t2, the rising of the motor running speed is slower than that in the present embodiment.

In Step S09, the second electromagnetic switching valve 654 is in the open state in Step S08, and thus, the liquid pressure cylinder 590 is operated. More specifically, the front chamber 596 of the liquid pressure cylinder 590 is connected to the second port 612 of the liquid pressure pump 610 via the second flow path 602. In this state, the working liquid discharged from the second port 612 of the liquid pressure pump 610 is supplied to the front chamber 596 via the second flow path 602, and thus, the liquid pressure cylinder 590 is operated in a direction in which the volume of the front chamber 596 increases, and the piston rod 593 is returned to the inside of the cylinder. Accordingly, the split molds of the movable mold 12 are opened.

In Fig. 9, the operation of Step S09 after the time t2 is performed. The second electromagnetic switching valve 654 is switched to the open state at the time t2, and since the liquid pressure of the working liquid is sufficiently increased when the supply of the working liquid to the liquid pressure cylinder 590 starts, as shown in Fig. 9, immediately after the time t2, the transition of the split mold position from the opening position to the closing position is faster than that of the related art. That is, the split mold opening control according to the liquid pressure circuit of the present embodiment is performed, and thus, when the first split mold 16 and the second split mold 17 of the movable mold 12 are opened, the rising of the opening operation is faster than that of the related art.

In the flowchart of Fig. 8, in Step S02, the first electromagnetic switching valve 653 is closed in Step S02. However, in this case, the second electromagnetic switching valve 654 may be opened or closed. Similarly, in Step S04, the second electromagnetic switching valve 654 is closed. However, in this case, the first electromagnetic switching valve 653 may be opened or closed. Alternatively, the opening and closing states of the first electromagnetic switching valve 653 and the second electromagnetic switching valve 654 may be unified and may be switched at the same time.

In addition, in the first embodiment, when the first split mold 16 and the second split mold 17 of the movable mold 12 are closed by the same method as the split mold opening control using the liquid pressure circuit 600, it is possible to speed up the rising of the closing operation. In this case, the opening and closing of the first electromagnetic switching valve 653 and the second electromagnetic switching valve 654 are reversed from the flowchart of Fig. 8. That is, first, in a state where the first electromagnetic switching valve 653 is switched to the closed state, the rotation of the motor 620 starts and the working liquid is discharged from the first port 611 of the liquid pressure pump 610 to the first flow path 601. As a result, the liquid pressure of the first flow path 601 between the first port 611 and the first electromagnetic switching valve 653 increases. The first electromagnetic switching valve 653 is switched to the open state after the liquid pressure of the working liquid for operating the split mold is sufficiently increased in advance before being supplied to the liquid pressure cylinder 590, and the working liquid discharged from the first port 611 of the liquid pressure pump 610 liquid is supplied to the rear chamber 597 of the liquid pressure cylinder 590 via the first flow path 601. As a result, the liquid pressure cylinder 590 is operated in a direction in which the volume of the rear chamber 597 increases, the piston rod 593 protrudes to the outside of the cylinder, and the split molds of the movable mold 12 are closed.

In this way, the injection molding machine 1A according to the first embodiment includes, in the mold clamping unit 100 of injection blow molding included in the injection molding machine 1A, the liquid pressure cylinder 590 which drives the split mold opening/closing unit 580 (movable member) for opening or closing the first split mold 16 and the second split mold 17 constituting the movable mold 12, the liquid pressure pump 610 which supplies the working liquid to the liquid pressure cylinder 590, the first flow path 601 and a second flow path 602 through which the liquid pressure pump 610 and the liquid pressure cylinder 590 are connected to each other, the first electromagnetic switching valve 653 and the second electromagnetic switching valve 654 which are respectively provided in the flow path between the liquid pressure pump 610 and the liquid pressure cylinder 590 in the first flow path 601 and the second flow path 602 to open or close the flow path, and the controller 700 which controls the operations of the liquid pressure pump 610, the first electromagnetic switching valve 653, and the second electromagnetic switching valve 654.

The controller 700 closes the second flow path 602 by the second electromagnetic switching valve 654 to drive the liquid pressure pump 610 in a state where the piston 592 of the liquid pressure cylinder 590 is not moved, and increases the liquid pressure of the working liquid of the second flow path 602 between the second electromagnetic switching valve 654 and the liquid pressure pump 610. Thereafter, the controller 700 opens the second flow path 602 by the second electromagnetic switching valve 654 to supply the working liquid to the front chamber 596 of the liquid pressure cylinder 590, operates the liquid pressure cylinder 590 in the direction in which the volume of the front chamber 596 increases, and drives the split mold opening/closing unit 580 so as to open the split mold.

Similarly, the controller 700 closes the first flow path 601 by the first electromagnetic switching valve 653 to drive the liquid pressure pump 610 in a state where the piston 592 of the liquid pressure cylinder 590 is not moved, and increases the liquid pressure of the working liquid of the first flow path 601 between the first electromagnetic switching valve 653 and the liquid pressure pump 610. Thereafter, the controller 700 opens the first flow path 601 by the first electromagnetic switching valve 653 to supply the working liquid to the rear chamber 597 of the liquid pressure cylinder 590, operates the liquid pressure cylinder 590 in the direction in which the volume of the rear chamber 597 increases, and drives the split mold opening/closing unit 580 so as to close the split mold.

According to this configuration, the liquid pressure of the working liquid can be increased in advance before the operation of the split mold opening/closing unit 580 starts. Accordingly, the liquid pressure of the working liquid supplied to the liquid pressure cylinder 590 immediately after the start of the operation can be stabilized, and it is possible to decrease the operation variation caused by the liquid pressure control. In addition, since a relatively high-pressure working liquid can be supplied to the liquid pressure cylinder 590 immediately after the start of the operation, the rising of operation can be accelerated, and responsiveness can be improved. Since the operation variation decreases and the responsiveness is improved, it is possible to shorten the cycle time of the injection molding and stabilize the operation, which is advantageous for a high cycle.

In addition, in the first embodiment, the electromagnetic switching valve of the flow path on the side on which the working liquid is supplied to the liquid pressure cylinder 590 is closed and the liquid pressure of the working liquid is increased in advance before the start of the operation. However, in contrast to this, the electromagnetic switching valve of the flow path on the side on which the working liquid is discharged from the liquid pressure cylinder 590 may be closed. For example, at the time of the split mold opening control, it is possible to close the first electromagnetic switching valve 653 of the first flow path 601 which discharges the working liquid from the rear chamber 597 of the liquid pressure cylinder 590. In this case, the second port 612 of the liquid pressure pump 610 and the front chamber 596 of the liquid pressure cylinder 590 communicate with each other, and the liquidpressure of this section increases. However, this state is in a state where the first electromagnetic switching valve 653 is closed and the working liquid cannot be discharged from the rear chamber 597, and thus, it is possible to cause the piston 592 of the liquid pressure cylinder 590 to be immovable. In this state, the controller 700 drives the liquid pressure pump 610 to increase the liquid pressures of the second flow path 602 and the front chamber 596, and thereafter, opens the first flow path 601 by the first electromagnetic switching valve 653 to discharge the working liquid from the rear chamber 597 of the liquid pressure cylinder 590, and operates the liquid pressure cylinder 590 in the direction in which the volume of the front chamber 596 increases. In this configuration, by using only the first electromagnetic switching valve 653, it is possible to operate the liquid pressure cylinder 590 after the liquid pressure of the working liquid is increased in advance, for both the split mold closing control and the split mold opening control.

Similarly, at the time of the split mold closing control, it is possible to close the second electromagnetic switching valve 654 of the second flow path 602 which discharges the working liquid from the front chamber 596 of the liquid pressure cylinder 590. In this case, the first port 611 of the liquid pressure pump 610 and the rear chamber 597 of the liquid pressure cylinder 590 communicate with each other, and the liquid pressure of this section increases. However, this state is in a state where the second electromagnetic switching valve 654 is closed and the working liquid cannot be discharged from the front chamber 596, and thus, it is possible to cause the piston 592 of the liquid pressure cylinder 590 to be immovable. In this state, the controller 700 drives the liquid pressure pump 610 to increase the liquid pressures of the first flow path 601 and the rear chamber 597, and thereafter, opens the second flow path 602 by the second electromagnetic switching valve 654 to discharge the working liquid from the front chamber 596 of the liquid pressure cylinder 590, and operates the liquid pressure cylinder 590 in the direction in which the volume of the rear chamber 597 increases. In this configuration, by using only the second electromagnetic switching valve 654, it is possible to operate the liquid pressure cylinder 590 after the liquid pressure of the working liquid is increased in advance, for both the split mold closing control and the split mold opening control.

### Second Embodiment

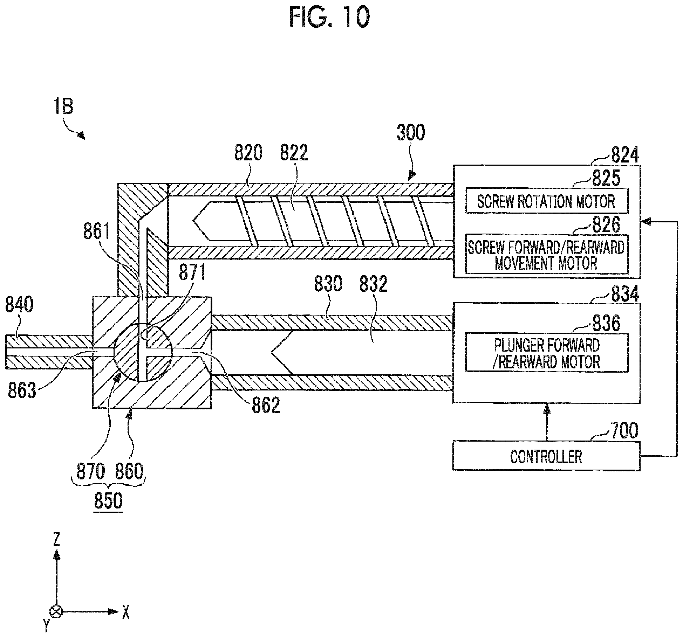

A second embodiment will be described with reference to Figs. 10 to 13. In the second embodiment, the injection unit 300 of the elements of the injection molding machine 1 shown in Figs. 1 and 2 is replaced with a preplasticizing type injection unit. Hereinafter, a configuration of a preplasticizing type injection unit 300 included in an injection molding machine 1B according to the second embodiment will be described.

### Configuration of Preplasticizing Type Injection Unit

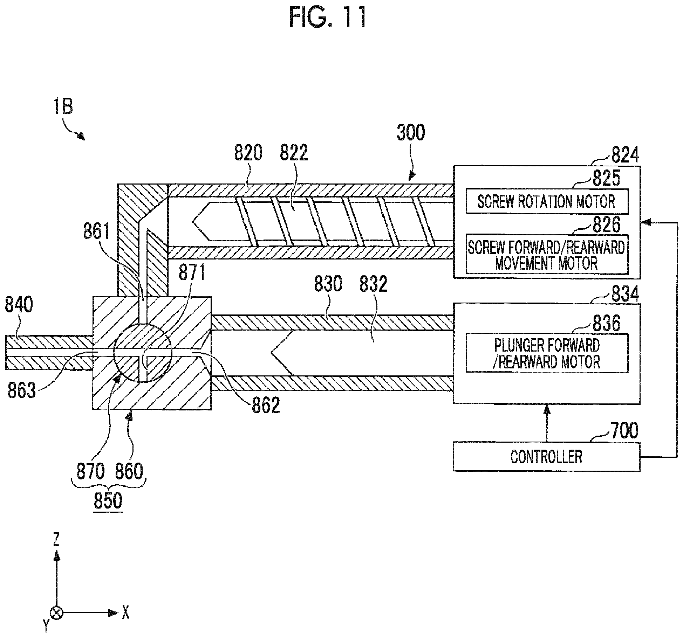

Fig. 10 is a view showing the injection unit 300 according to the second embodiment and is a view showing a first state of a valve body 870 of a direction switching valve 850. Fig. 11 is a view showing the injection unit 300 according to the second embodiment and is a view showing a second state of the valve body 870 of the direction switching valve 850. Figs. 10 and 11 are sectional views perpendicular to a rotation center line of the valve body 870. As shown in Figs. 10 and 11, the injection unit 300 includes a screw cylinder 820, a screw 822, a screw drive unit 824, a plunger cylinder 830, a plunger 832, a plunger drive unit 834, a nozzle 840, the direction switching valve 850, and the controller 700.

A solid molding material is supplied to the inside of the screw cylinder 820 from the outside. The screw cylinder 820 heats and melts the solid molding material. A heating source such as a heater is provided on an outer periphery of the screw cylinder 820.

The screw 822 is disposed inside the screw cylinder 820 and moves the molding material inside the screw cylinder 820. The screw 822 may be disposed to be rotatable and movable forward or rearward inside the screw cylinder 820. In addition, the screw 822 may be disposed to be rotatable and movable forward or rearward inside the screw cylinder 820.

The screw drive unit 824 operates the screw 822. For example, the screw drive unit 824 includes a screw rotation motor 825 and a screw forward/rearward movement motor 826. The screw rotation motor 825 rotates the screw 822. The screw forward/rearward movement motor 826 moves the screw 822 forward or rearward. A motion conversion mechanism which converts a rotary motion of the screw forward/rearward movement motor 826 into a linear motion of the screw 822 is provided between the screw 822 and the screw forward/rearward movement motor 826. For example, the motion conversion mechanism is configured of a ball screw or the like.

The molding material is supplied from the screw cylinder 820 to the inside of the plunger cylinder 830. A heating source such as a heater is provided on an outer periphery of the plunger cylinder 830.

The plunger 832 is disposed inside the plunger cylinder 830 and moves the molding material inside the plunger cylinder 830. The plunger 832 is disposed to be movable forward or rearward inside the plunger cylinder 830.

The plunger drive unit 834 operates the plunger 832. The plunger drive unit 834 includes a plunger forward/rearward movement motor 836. The plunger forward/rearward movement motor 836 moves the plunger 832 forward or rearward. A motion conversion mechanism which converts a rotary motion of the plunger forward/rearward movement motor 836 into a linear motion of plunger 832 is provided between the plunger 832 and the plunger forward/rearward movement motor 836. For example, the motion conversion mechanism is configured of a ball screw or the like.

The nozzle 840 injects the molding material supplied from the direction switching valve 50 to the mold unit. A liquid molding material with which the inside of the mold unit is filled is solidified, and thus, the molding product is molded.

The direction switching valve 850 switches a flow direction of the molding material between the screw cylinder 820, the plunger cylinder 830, and the nozzle 840. The direction switching valve 850 has a valve box 860 and a valve body 870.

The valve box 860 includes a screw cylinder connection port 861, a plunger cylinder connection port 862, and a nozzle connection port 863. The screw cylinder connection port 861 communicates with the inside of the screw cylinder 820. The plunger cylinder connection port 862 communicates with the inside of the plunger cylinder 830. The nozzle connection port 863 communicates with the inside of the nozzle 840.

For example, the plunger cylinder connection port 862 and the nozzle connection port 863 are provided on sides opposite to each other in a state where a rotation center line of the valve body 870 is interposed therebetween. Meanwhile, for example, the screw cylinder connection port 861 is provided at substantially the same distance from the plunger cylinder connection port 862 and the nozzle connection port 863 along an outer periphery of the valve body 870. That is, the plunger cylinder connection port 862, the screw cylinder connection port 861, and the nozzle connection port 863 are disposed in this order at a 90° pitch in a predetermined direction (the counterclockwise direction in Figs. 10 and 11) about the rotation center line of the valve body 870.

The valve body 870 is rotated inside the valve box 860 and thus, the state is switched into a first state (refer to Fig. 10) and a second state (refer to Fig. 11). In the first state, the valve body 870 communicates the screw cylinder connection port 861 and the plunger cylinder connection port 862 and closes the nozzle connection port 863. Meanwhile, in the second state, the valve body 870 communicates the plunger cylinder connection port 862 and the nozzle connection port 863 and closes the screw cylinder connection port 861. In order to perform the switching between the two states, in the present embodiment, a flow path 871 which is formed in an approximately T shape when viewed in the direction of the rotation center line of the valve body 870 is provided in the inner portion of the valve body 870.

In addition, the state of the valve body 870 is not limited to the first state shown in Fig. 10 and the second state shown in Fig. 11. For example, the valve body 870 may close the screw cylinder connection port 861, the plunger cylinder connection port 862, and the nozzle connection port 863 at the same time. In addition, the valve body 870 may communicate with the screw cylinder connection port 861 and the nozzle connection port 863 and may close the plunger cylinder connection port 862.

The controller 700 controls the screw drive unit 824, the plunger drive unit 834, the direction switching valve 850, or the like.

### Rotation Control of Valve Body by Liquid Pressure Circuit

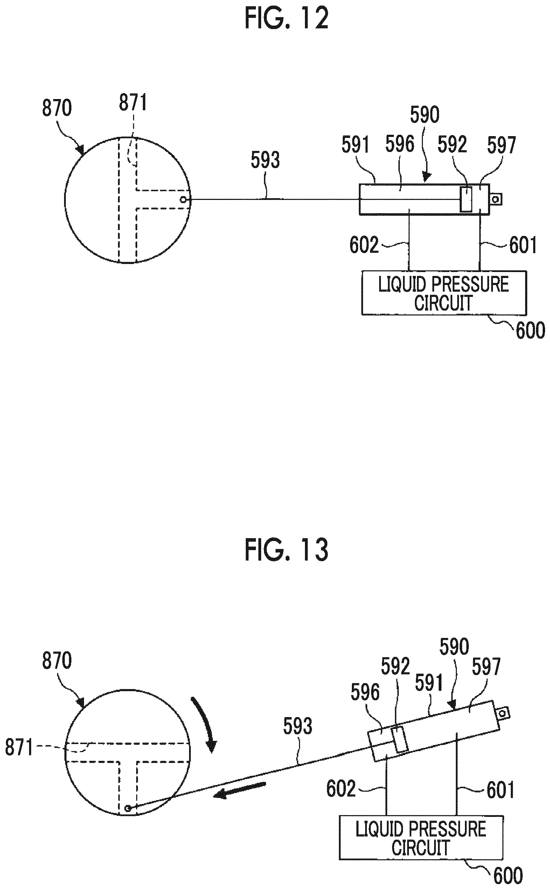

Fig. 12 is a view schematically showing a relationship between the valve body 870 of the direction switching valve 850 and the liquid pressure circuit 600 in the second embodiment and is a view showing the first state of the valve body 870. Fig. 13 is a view schematically showing the relationship between the valve body 870 of the direction switching valve 850 and the liquid pressure circuit 600 in the second embodiment and is a view showing the second state of the valve body 870. As shown in Figs. 12 and 13, in the second embodiment, similarly to the split mold opening/closing unit 580 of the first embodiment, the rotational operation of the valve body 870 (movable member) of the direction switching valve 850 is performed using the liquid pressure cylinder 590 and the liquid pressure circuit 600.

An external tip of the piston rod 593 of the liquid pressure cylinder 590 is rotatably connected to the valve body 870. In addition, for example, the cylinder body 591 of the liquidpressure cylinder 590 is rotatably connected to the fixed portion of the injection molding machine 1B such as the frame Fr and is installed so as to be rotatable appropriately according to the rotation of the valve body 870 about this connection portion.

In Fig. 12, the working liquid discharged from the liquid pressure circuit 600 is supplied to the front chamber 596 of the liquid pressure cylinder 590 via the second flow path 602, and thus, the piston rod 593 enters the inside of the cylinder, and the valve body 870 of the direction switching valve 850 is brought into the first state.

Meanwhile, in Fig. 13, the working liquid discharged from the liquid pressure circuit 600 is supplied to the rear chamber 597 of the liquid pressure cylinder 590 via the first flow path 601, and thus, the piston rod 593 protrudes to the outside of the cylinder. In this case, the linearly forward motion of the piston rod 593 is converted into a rotational operation via the connection portion between the piston rod 593 and the valve body 870, and the rotational operation is transmitted to the valve body 870. Accordingly, the valve body 870 of the direction switching valve 850 is rotated and is brought into the second state.

In this way, in the second embodiment, the valve body 870 of the direction switching valve 850 is rotated by converting a reciprocating motion of the liquid pressure cylinder 590 by the liquid pressure circuit 600 into an axially rotary motion of the valve body 870. Similarly to the first embodiment, when the liquid pressure cylinder 590 is operated, the first electromagnetic switching valve 653 (refer to Fig. 7) of the liquid pressure circuit 600 is closed before the working liquid is supplied to the rear chamber 597 of the liquid pressure cylinder 590 to increase the liquid pressure of the working liquid in advance, and thus, it is possible to improve the rising of the rotational operation of the valve body 870 from the first state to the second state. Similarly, the second electromagnetic switching valve 654 (refer to Fig. 7) of the liquid pressure circuit 600 is closed before the working liquid is supplied to the front chamber 596 of the liquid pressure cylinder 590 to increase the liquid pressure of the working liquid in advance, and thus, it is possible to improve the rising of the rotational operation of the valve body 870 from the second state to the first state.

In addition, the configuration for converting the reciprocating motion of the liquid pressure cylinder 590 by the liquid pressure circuit 600 into the axially rotary motion of the valve body 870 is not limited to those shown in Figs. 12 and 13.

### Third Embodiment

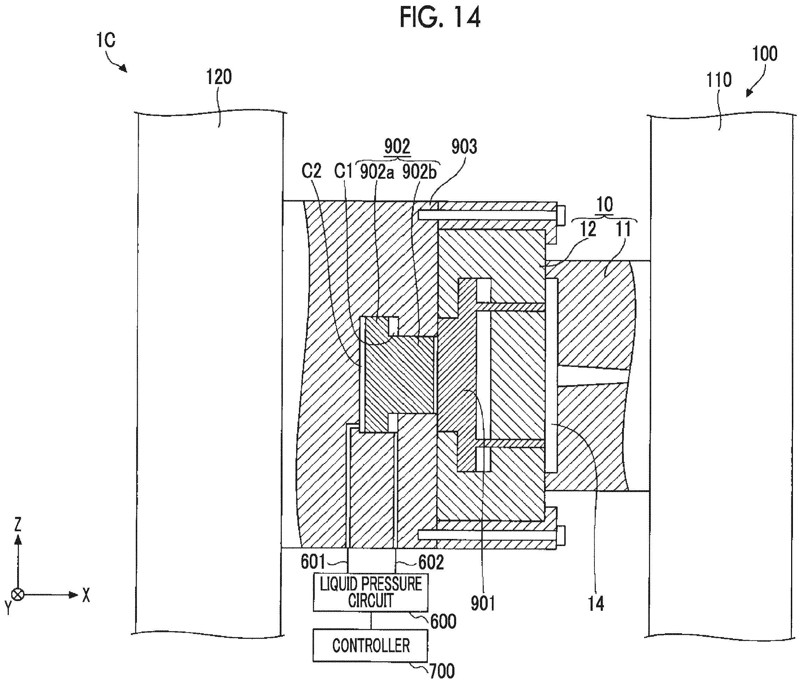

A third embodiment will be described with reference to Fig. 14. In the third embodiment, the mold clamping unit 100 of the elements of the injection molding machine 1 shown in Figs. 1 and 2 is replaced with a mold clamping unit having a compression core 901. Hereinafter, a configuration of a mold clamping unit 100 having the compression core 901 included in an injection molding machine 1C according to the third embodiment will be described.

Fig. 14 is a partially sectional view showing a schematic configuration of the mold clamping unit 100 of the injection molding machine 1C according to the third embodiment. As shown in Fig. 14, in the third embodiment, the mold clamping unit 100 includes the compression core 901 which compresses the molding material in the cavity space 14, a pressing member 902 which presses the compression core 901, a compression cylinder 903 (cylinder) which accommodates the pressing member 902, the liquid pressure circuit 600 which is a driving circuit for driving the pressing member 902, and a controller 700 which controls the liquid pressure circuit 600, in addition to the configurations shown in Figs. 1 and 2.

The compression cylinder 903 is attached to the movable platen 120. The movable mold 12 is fixed to the compression cylinder 903 by fasteners such as bolts and metal fittings. That is, the compression cylinder 903 and the movable mold 12 are attached to the movable platen 120 in this order.

As shown in Fig. 14, the pressing member 902 includes a piston 902a and a piston rod 902b. The piston 902a is accommodated inside the compression cylinder 903 so as to be movable forward or rearward, and partitions the inside of the compression cylinder 903 into a front chamber C1 (second chamber) and a rear chamber C2 (first chamber) . The front chamber C1 is close to the movable mold 12 from the rear chamber C2. The piston rod 902b extends forward (the side of the movable mold 12) from the piston 902a. Since the piston rod 902b penetrates the front chamber C1, a cross-sectional area of the front chamber C1 is smaller than a cross-sectional area of the rear chamber C2.

The compression core 901 is disposed inside the movable mold 12 so as to be movable forward or rearward. A rear end face of the compression core 901 is disposed so as to come into contact with a front end portion of the piston rod 902b.

The liquid pressure circuit 600 is connected to the rear chamber C2 of the compression cylinder 903 via a first flow path 601 and is connected to the front chamber C1 of the compression cylinder 903 via a second flow path 602.

In the injection molding machine 1C, the filling process, the holding pressure process, or the like is performed during the mold clamping process, and a compression process in which the compression core 901 compresses the molding material in the mold unit 10 is performed. In the compression process, if the working liquid discharged from the liquid pressure circuit 600 is supplied to the rear chamber C2 of the compression cylinder 903 via the first flow path 601, the pressing member 902 is pushed forward to be moved forward. After the pressing member 902 comes into contact with the compression core 901, the pressing member 902 pushes the compression core 901 forward and compresses the molding material in the cavity space 14 by the compression core 901.

Meanwhile, if the working liquid discharged from the liquid pressure circuit 600 is supplied to the front chamber C1 of the compression cylinder 903 via the second flow path 602, the pressing member 902 is moved rearward. According to the rearward movement of the pressing member 902, the compression core 901 is returned to the original position by a biasing force of a return spring.

In this way, in the third embodiment, the forward movement (compression operation) and the rearward movement of the compression core 901 are controlled using the liquid pressure circuit 600. In addition, similarly to the first embodiment, when the compression core 901 (movable member) is moved forward to compress the molding material in the cavity space 14, the first electromagnetic switching valve 653 (refer to Fig. 7) of the liquid pressure circuit 600 is closed before the working liquid is supplied to the rear chamber C2 of the compression cylinder 903 to increase the liquid pressure of the working liquid in advance, and thus, it is possible to improve the rising of the forward movements of the pressing member 902 and the compression core 901 and it is possible to shorten the compression process. Similarly, the second electromagnetic switching valve 654 (refer to Fig. 7) of the liquid pressure circuit 600 is closed before the working liquid is supplied to the front chamber C1 of the compression cylinder 903 to increase the liquid pressure of the working liquid in advance, and thus, it is possible to improve the rising of the rearward movements of the pressing member 902 and the compression core 901.

### Fourth Embodiment

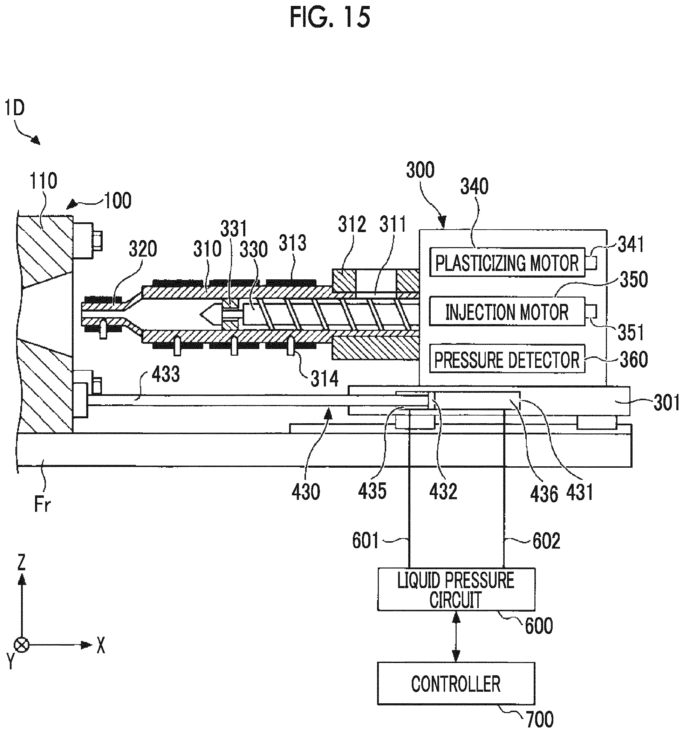

A fourth embodiment will be described with reference to Fig. 15. In the fourth embodiment, the liquid pressure circuit 600 is applied as a power source of the movement unit 400 of the elements of the injection molding machine 1 shown in Figs. 1 and 2. Hereinafter, the configuration of the movement unit 400 included in an injection molding machine 1D according to a fourth embodiment will be described.

Fig. 15 is a partially sectional view showing a schematic configuration of the movement unit 400 of the injection molding machine 1D according to the fourth embodiment. As shown in Fig. 15, the front chamber 435 of the liquid pressure cylinder 430 of the movement unit 400 is connected to the liquid pressure circuit 600 via the first flow path 601. The working liquid discharged from the liquid pressure circuit 600 is supplied to the front chamber 435 via the first flow path 601, and thus, the injection unit 300 is pushed forward. The injection unit 300 is moved forward and the nozzle 320 is pressed against the stationary mold 11.

Meanwhile, the rear chamber 436 of the liquid pressure cylinder 430 of the movement unit 400 is connected to the liquid pressure circuit 600 via the second flow path 602. The working liquid discharged from the liquidpressure circuit 600 is supplied to the rear chamber 436 of the liquid pressure cylinder 430 via the second flow path 602, and thus, the injection unit 300 is pushed rearward. The injection unit 300 is moved rearward and the nozzle 320 is moved away from the stationary mold 11.

In this way, in the fourth embodiment, the forward movement and the rearward movement of the injection unit 300 are controlled using the liquid pressure circuit 600 as the power source of the movement unit 400 (movable member). In addition, similarly to the first embodiment, when the injection unit 300 is moved forward so as to come into contact with the nozzle, the first electromagnetic switching valve 653 (refer to Fig. 7) of the liquid pressure circuit 600 is closed before the working liquid is supplied to the front chamber 435 of the liquidpressure cylinder 430 to increase the liquid pressure of the working liquid in advance, and thus, it is possible to improve the rising of the forward movement of the injection unit 300. Similarly, when the injection unit 300 is moved rearward, the second electromagnetic switching valve 654 (refer to Fig. 7) of the liquid pressure circuit 600 is closed before the working liquid is supplied to the rear chamber 436 of the liquidpressure cylinder 430 to increase the liquid pressure of the working liquid in advance, and thus, it is possible to improve the rising of the rearward movement of the injection unit 300.

Hereinbefore, the embodiments are described with reference to specific examples. However, the present disclosure is not limited to these specific examples. Design modifications being applied to these specific examples by a person skilled in the art is also included within the scope of the present disclosure as long as it has the features of the present disclosure. The elements, the arrangement, the conditions, the shape, or the like of the respective specific examples described above are not limited to those exemplified and can be appropriately modified. The elements included in each of the above-described specific examples can be appropriately changed in combination as long as no technical inconsistency occurs.

In the above-described embodiments, the configuration is exemplified, in which the first electromagnetic switching valve 653 or the second electromagnetic switching valve 654 of the liquidpressure circuit 600 is used to increase the liquidpressure of the working liquid in advance before the starting of the operation. However, for example, any element such as an electromagnetic check valve or a pilot check valve other than the electromagnetic switching valve may be applied as long as it can open or close the flow path and can prevent the working liquid from being supplied to the liquid pressure cylinder 590 before the liquid pressure of the working liquid increases.

In addition, in the above-described embodiments, the configuration is exemplified, in which both the method of improving the rising of the operation (for example, the split mold closing operation) of protruding the piston rod 593 of the liquid pressure cylinder 590 to the outside using the first electromagnetic switching valve 653 of the liquid pressure circuit 600 and the method of improving the rising of the operation (for example, the split mold opening operation) of moving the piston rod 593 of the liquid pressure cylinder 590 to the inside using the second electromagnetic switching valve 654 can be performed. However, a configuration in which any one method can be performed may be adopted. In this case, only one liquid pressure circuit 600 relating to the improvement of the rising of the first electromagnetic switching valve 653 and the second electromagnetic switching valve 654 may be provided.

As shown in Fig. 7, the injection molding machine 1A according to the first embodiment includes the first split mold 16 and the second split mold 17 which are moved close to or away from each other to perform the opening/closing operation. The first split mold 16 and the second split mold 17 configure the movable mold 12 which is the opening/closing member. In addition, the injection molding machine 1A includes a first liquid pressure cylinder 590-1 which moves the first split mold 16 and a second liquid pressure cylinder 590-2 which moves the second split mold 17. Moreover, the injection molding machine 1A includes a first liquid pressure circuit 600-1 which supplies a liquid pressure (for example, hydraulic pressure) of a first working liquid to the first liquid pressure cylinder 590-1 and a second liquid pressure circuit 600-2 which supplies a liquid pressure (for example, hydraulic pressure) of a second working liquid to the second liquid pressure cylinder 590-2.

Moreover, the disposition of the first split mold 16 and the second split mold 17 may be reversed. In Fig. 7, the liquid pressure cylinder 590 on a right side of the drawing is the first liquid pressure cylinder 590-1 and the liquid pressure cylinder 590 on a left side in the drawing is the second liquid pressure cylinder 590-2. However, the liquid pressure cylinder 590 on the right side of the drawing may be the second liquid pressure cylinder 590-2 and the liquid pressure cylinder 590 on the left side in the drawing may be the first liquid pressure cylinder 590-1. Similarly, in Fig. 7, the liquid pressure circuit 600 on the right side in the drawing is the first liquid pressure circuit 600-1 and the liquid pressure circuit 600 on the left side in the drawing is the second liquid pressure circuit 600-2. However, the liquid pressure circuit 600 on the right side in the drawing may be the second liquid pressure circuit 600-2 and the liquid pressure circuit 600 on the left side in the drawing may be the first liquid pressure circuit 600-1.

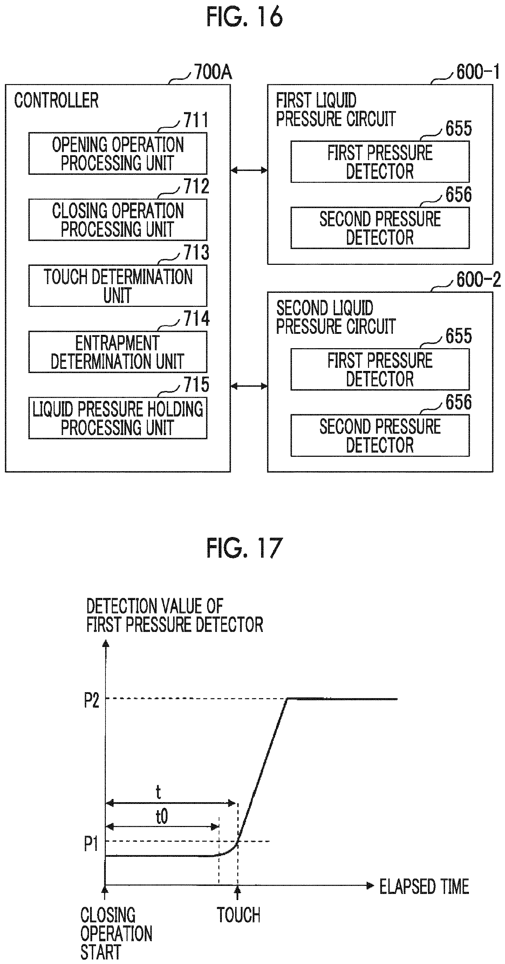

Fig. 16 is a diagram showing a configuration of a controller according to a modification example of the first embodiment. The functional blocks shown in Fig. 16 are conceptual and do not necessarily have to be physically configured as shown. All functional blocks or some functional blocks can be configured so as to be dispersed or integrated functionally or physically in any unit. All processing functions or some processing functions performed in the functional blocks can be realized by a program executed by a CPU or can be realized as hardware by wired logic. In addition, a controller 700A may have other processing functions in addition to processing functions shown in Fig. 16.

The controller 700A controls the first liquid pressure circuit 600-1 and the second liquid pressure circuit 600-2 so as to control the first liquid pressure cylinder 590-1 and the second liquid pressure cylinder 590-2. The controller 700A includes an opening operation processing unit 711 which performs an opening operation for moving the first split mold 16 and the second split mold 17 away from each other. The opening operation processing unit 711 may simultaneously move both the first split mold 16 and the second split mold 17 in directions opposite to each other. In addition, the controller 700A includes a closing operation processing unit 712 which performs a closing operation of moving the first split mold 16 and the second split mold 17 close to each other. The closing operation processing unit 712 may simultaneously move both the first split mold 16 and the second split mold 17 in directions opposite to each other.

The controller 700A includes a touch determination unit 713 which determines whether or not the first split mold 16 and the second split mold 17 come into contact with each other during the closing operation by the closing operation processing unit 712. After the touch determination unit 713 confirms that first split mold 16 and second split mold 17 come into contact with each other, it is possible to blow-mold the molding product 4 by expanding the preform 2 in the cavity space formed between the first split mold 16 and the second split mold 17. Since the preform 2 is expanded in a state where there is no gap between first split mold 16 and the second split mold 17, it is possible to prevent leakage of the molding material referred to as burr.

Fig. 17 is a graph showing a relationship between an elapsed time after the start of the closing operation of the first split mold and the second split mold and a detection value of the first pressure detector of the first liquid pressure circuit in the modification example of the first embodiment. For example, for the determination of the touch determination unit 713, the first pressure detector 655 of the first liquid pressure circuit 600-1 is used. The first pressure detector 655 detects the liquid pressure of the first working liquid which moves the first split mold 16 close to the second split mold 17. If the first split mold 16 moves close to the second split mold 17 and comes into contact with the second split mold 17, the first split mold 16 is pushed back by the second split mold 17. Accordingly, the detection value of the first pressure detector 655 increases and reaches a first threshold value P1 set in advance by experiment or the like. Therefore, the touch determination unit 713 can determine whether or not the first split mold 16 and the second split mold 17 come into contact with each other, depending on whether or not the detection value of the first pressure detector 655 is equal to or more than the first threshold value P1.

A type of a detector used for the determination of the touch determination unit 713 is not limited to the first pressure detector 655 of the first liquid pressure circuit 600-1. In addition, the number of detectors used for the determination of the touch determination unit 713 is not limited to one, and a plurality of detectors may be used. The touch determination unit 713 may determine whether or not the first split mold 16 and the second split mold 17 come into contact with each other, based on detection results of a plurality of detectors described later.

For example, the detector used for the determination of the touch determination unit 713 may be the second pressure detector 656 of the first liquid pressure circuit 600-1. Similarly to the first pressure detector 655 of the first liquid pressure circuit 600-1, the second pressure detector 656 of the first liquid pressure circuit 600-1 detects the liquid pressure of the first working liquid which moves the first split mold 16 close to the second split mold 17. The relationship between the elapsed time from the start of the closing operation of the first split mold 16 and the second split mold 17 and the detection value of the second pressure detector 656 of the first liquid pressure circuit 600-1 is the same as that of Fig. 17, and thus, the descriptions thereof are omitted.

The detector used for the determination of the touch determination unit 713 may be the first pressure detector 655 of the second liquid pressure circuit 600-2. The first pressure detector 655 of the second liquid pressure circuit 600-2 detects the liquid pressure of the second working liquid which moves the second split mold 17 close to the first split mold 16. The relationship between the elapsed time from the start of the closing operation of the first split mold 16 and the second split mold 17 and the detection value of the first pressure detector 655 of the second liquid pressure circuit 600-2 is the same as that of Fig. 17, and thus, the descriptions thereof are omitted.

The detector used for the determination of the touch determination unit 713 may be the second pressure detector 656 of the second liquid pressure circuit 600-2. Similarly to the first pressure detector 655 of the second liquid pressure circuit 600-2, the second pressure detector 656 of the second liquid pressure circuit 600-2 detects the liquid pressure of the second working liquid which moves the second split mold 17 close to the first split mold 16. The relationship between the elapsed time from the start of the closing operation of the first split mold 16 and the second split mold 17 and the detection value of the second pressure detector 656 of the second liquid pressure circuit 600-2 is the same as that of Fig. 17, and thus, the descriptions thereof are omitted.

The detector used for the determination of the touch determination unit 713 may be a proximity sensor for detecting proximity between the first split mold 16 and the second split mold 17, a distance sensor for detecting a distance between the first split mold 16 and the second split mold 17, or a combination of a first position detector for detecting the position of the first split mold 16 and a second position detector for detecting the position of the second split mold 17.

For example, the proximity sensor transmits signals to the controller 700A only when the first split mold 16 and the second split mold 17 come into contact with each other. In addition, the proximity sensor may transmit signals to the controller 700A only when the first split mold 16 and the second split mold 17 do not come into contact with each other. Moreover, the proximity sensor may transmit different signals to the controller 700A when the first split mold 16 and the second split mold 17 come into contact with each other and do not come into contact with each other. Based on the signals from the proximity sensor, touch determination unit 713 determines whether or not the first split mold 16 and the second split mold 17 come into contact with each other.

For example, as the distance sensor, a laser displacement meter or the like is used. The laser displacement meter detects the distance between the first split mold 16 and the second split mold 17 and transmits signals indicating the detection results to the controller 700A. The touch determination unit 713 determines whether or not the first split mold 16 and the second split mold 17 come into contact with each other, depending on whether or not the distance between the first split mold 16 and the second split mold 17 is zero.

The first position detector detects the position of the first split mold 16 and transmits signals indicating the detection results to the controller 700A. Similarly, the second position detector detects the position of the second split mold 17 and transmits signals indicating the detection results to the controller 700A. The touch determination unit 713 calculates the distance between the first split mold 16 and the second split mold 17 based on the detection results of the first position detector and the detection results of the second position detector, and determines whether or not the first split mold 16 and the second split mold 17 come into contact with each other, depending on whether or not the calculated distance is zero.

As shown in Fig. 16, the controller 700A includes an entrapment determination unit 714 which determines whether or not a foreign matter is interposed between the first split mold 16 and the second split mold 17 during the closing operation by the closing operation processing unit 712. If the entrapment determination unit 714 determines that the foreign matter is interposed between the first split mold 16 and the second split mold 17 during the closing operation by the closing operation processing unit 712, the closing operation processing unit 712 stops the closing operation. Thereafter, the opening operation processing unit 711 may perform the opening operation. In a case where the foreign matter is interposed between the first split mold 16 and the second split mold 17 during the closing operation, a gap is formed between the first split mold 16 and the second split mold 17. According to the present modification example, in the case where the foreign matter is interposed therebetween, the closing operation is stopped, and thus, it is possible to prevent the blow molding from being performed in a state where a gap is formed.

As shown in Fig. 17, for example, the entrapment determination unit 714 determines whether or not the foreign matter is interposed therebetween, depending on whether or not a time t until the detection value of the first pressure detector 655 of the first liquid pressure circuit 600-1 reaches the first threshold value P1 from the start of the closing operation of the first split mold 16 and the second split mold 17 is equal to or less than a set time t0. The set time t0 is set to be slightly shorter than a time required for the closing operation when the foreign matter is not interposed between the first split mold 16 and the second split mold 17. If the foreign matter is interposed between the first split mold 16 and the second split mold 17, the first split mold 16 and the second split mold 17 are pushed back via the foreign matter. Therefore, before the first split mold 16 and the second split mold 17 come into contact with each other, the detection value of the first pressure detector 655 increases to reach the first threshold value P1, and the time t becomes equal to or less than the set time t0.

Accordingly, in the case where the time t is equal to or less than the set time t0, the entrapment determination unit 714 determines that the foreign matter is interposed between the first split mold 16 and the second split mold 17 before the first split mold 16 and the second split mold 17 come into contact with each other. In addition, in the case where the time t is equal to or less than the set time t0, the touch determination unit 713 determines that the first split mold 16 and the second split mold 17 do not come into contact with each other. Even in the case where the detection value of the first pressure detector 655 reaches the first threshold value P1, if the time t is equal to or less than the set time t0, the foreign matter is interposed between the first split mold 16 and the second split mold 17. This is because the first split mold 16 and the second split mold 17 do not come into contact with each other.

Meanwhile, in a case where the time t exceeds the set time t0, the entrapment determination unit 714 determines that the foreign matter is not interposed between the first split mold 16 and the second split mold 17. Also, in the case where the time t exceeds the set time t0, the touch determination unit 713 determines that the first split mold 16 and the second split mold 17 come into contact with each other. This is because the detection value of the first pressure detector 655 reaches the first threshold value P1, the foreign matter is not interposed between the first split mold 16 and the second split mold 17, and thus, the first split mold 16 and the second split mold 17 come into contact with each other.

In addition, the type of the detector used for the determination of the entrapment determination unit 714 is not limited to the first pressure detector 655 of the first liquid pressure circuit 600-1. As the detector used for the determination of the entrapment determination unit 714, a detector which is the same as the detector used for the determination of the touch determination unit 713 can be used. In addition, the number of detectors used for the determination of the entrapment determination unit 714 is not limited to one, and a plurality of detectors may be used. The entrapment determination unit 714 may determine whether or not the foreign matter is interposed between the first split mold 16 and the second split mold 17, based on the detection results of the plurality of detectors.

The entrapment determination unit 714 may determine whether or not the foreign matter is interposed therebetween, depending on whether or not the first split mold 16 and the second split mold 17 come into contact with each other when the elapsed time from the start of the closing operation by the closing operation processing unit 712 reaches a set time t1. The set time t1 is set to be slightly longer than the time required for the closing operation when the foreign matter is not interposed between the first split mold 16 and the second split mold 17. If the foreign matter is interposed between the first split mold 16 and the second split mold 17, the first split mold 16 and the second split mold 17 are pushed back via the foreign matter. Accordingly, when the elapsed time from the start of the closing operation reaches the set time t1, the first split mold 16 and the second split mold 17 do not come into contact with each other.

Therefore, in the case where the first split mold 16 and the second split mold 17 do not come into contact with each other touching when the elapsed time from the start of the closing operation reaches the set time t1, the entrapment determination unit 714 determines that the foreign matter is interposed between the first split mold 16 and the second split mold 17. Meanwhile, in the case where the first split mold 16 and the second split mold 17 come into contact with each other touching when the elapsed time from the start of the closing operation reaches the set time t1, the entrapment determination unit 714 determines that the foreign matter is not interposed between the first split mold 16 and the second split mold 17.

As shown in Fig. 16, in order to hold the liquid pressure at which the first split mold 16 and the second split mold 17 are pressed against each other after the first split mold 16 and the second split mold 17 come into contact with each other to be equal to or more than a second threshold value P2, the controller 700A includes a liquid pressure holding processing unit 715 which closes the first flow path 601 of each of the first liquidpressure circuit 600-1 and the second liquid pressure circuit 600-2. The second threshold value P2 is set such that the first split mold 16 and the second split mold 17 are not opened by the pressure of compressed air during the blow molding.

As shown in Fig. 17, for example, if the detection value of the first pressure detector 655 of the first liquid pressure circuit 600-1 becomes equal to or more than the second threshold value P2 after the first split mold 16 and the second split mold 17 come into contact with each other, the liquid pressure holding processing unit 715 closes the first electromagnetic switching valve 653 of the first liquid pressure circuit 600-1. As a result, the liquid pressure of the rear chamber 597 of the first liquid pressure cylinder 590-1, that is, the liquid pressure by which the first split mold 16 of the first working liquid is pressed to the second split mold 17 is held to be equal to or more than the second threshold value P2. This state is maintained even when the motor 620 of the first liquid pressure circuit 600-1 is stopped. By holding the liquid pressure by which the first split mold 16 of the first working liquid is pressed to the second split mold 17 to be equal to more than the second threshold value P2, it is possible to prevent the first split mold 16 and the second split mold 17 from being opened due to the pressure of the compressed air during the blow molding. In addition (or in addition to) the detection value of the first pressure detector 655 of the first liquid pressure circuit 600-1, the detection value of the second pressure detector 656 of the first liquid pressure circuit 600-1 may be used. In addition, the liquid pressure holding processing unit 715 may close the first electromagnetic switching valve 653 of the first liquid pressure circuit 600-1 when the elapsed time after the first split mold 16 and the second split mold 17 come into contact with each other reaches the set time. Here, the set time is set by experiment or the like such that the detection value of the first pressure detector 655 becomes equal to or more than the second threshold value P2 when the first electromagnetic switching valve 653 is closed.

Similarly, if the detection value of the first pressure detector 655 of the second liquid pressure circuit 600-2 becomes equal to or more than the second threshold value P2 after the first split mold 16 and the second split mold 17 come into contact with each other, the liquid pressure holding processing unit 715 closes the first electromagnetic switching valve 653 of the second liquid pressure circuit 600-2. As a result, the liquid pressure of the rear chamber 597 of the second liquid pressure cylinder 590-2, that is, the liquid pressure by which the second split mold 17 of the second working liquid is pressed to the first split mold 16 is held to be equal to or more than the second threshold value P2. This state is maintained even when the motor 620 of the second liquid pressure circuit 600-2 is stopped. By holding the liquid pressure by which the second split mold 17 of the second working liquid is pressed to the first split mold 16 to be equal to more than the second threshold value P2, it is possible to prevent the first split mold 16 and the second split mold 17 from being opened due to the pressure of the compressed air during the blow molding. In addition (or in addition to) the detection value of the first pressure detector 655 of the second liquid pressure circuit 600-2, the detection value of the second pressure detector 656 of the second liquid pressure circuit 600-2 may be used. In addition, the liquid pressure holding processing unit 715 may close the first electromagnetic switching valve 653 of the second liquid pressure circuit 600-2 when the elapsed time after the first split mold 16 and the second split mold 17 come into contact with each other reaches the set time. Here, the set time is set by experiment or the like such that the detection value of the first pressure detector 655 becomes equal to or more than the second threshold value P2 when the first electromagnetic switching valve 653 is closed.

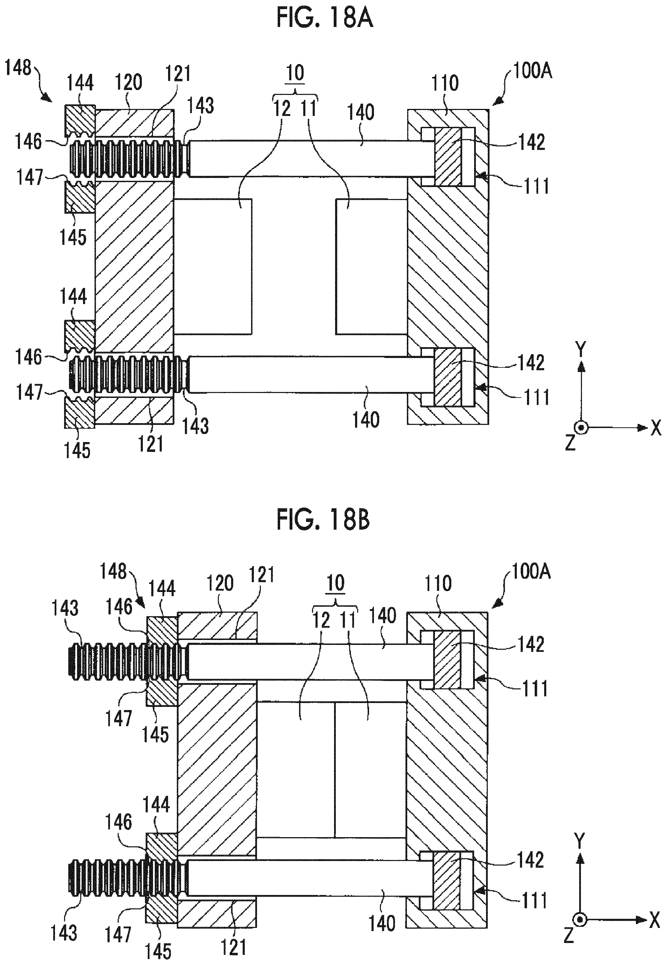

The contents of the above-described embodiments and the above-described modification examples may be applied to the following fifth embodiment. Figs. 18A and 18B are views showing a mold clamping unit of an injection molding machine according to the fifth embodiment. Fig. 18A is a view showing a state when a mold opening of the mold clamping unit according to the fifth embodiment is completed, and Fig. 18B is a view showing a state when the mold of the mold clamping unit according to the fifth embodiment is clamped.

A mold clamping unit 100A of the present embodiment includes the stationary platen 110 to which the stationary mold 11 is attached, the movable platen 120 to which the movable mold 12 is attached, and the tie bars 140 which connect the stationary platen 110 and the movable platen 120 to each other. One end of each of the tie bars 140 in a longitudinal direction is inserted into the inside of the stationary platen 110 and the other end thereof in the longitudinal direction is inserted through a through-hole 121 of the movable platen 120.

The mold clamping unit 100A includes a mold clamping cylinder 111 which accommodates a piston 142 fixed to one end portion of each of the tie bars 140 in the longitudinal direction. For example, the mold clamping cylinder 111 is provided at four corners of the stationary platen 110. The liquid pressure (for example, hydraulic pressure) of the working liquid is supplied to each of the four mold clamping cylinders 111. As a result, each of the four pistons 142 is pushed in a mold clamping direction (a right direction in Figs. 18A and 18B).

The mold clamping unit 100A includes a first fitting portion 144 and a second fitting portion 145 which are fitted into a fitting groove 143 formed on the other end portion of the tie bar 140 in the longitudinal direction. The first fitting portion 144 and the second fitting portion 145 are moved close to and away from each other to perform an opening/closing operation. The first fitting portion 144 and the second fitting portion 145 configure an opening/closing member 148. For example, the fitting groove 143 is formed in a ring shape, and a plurality of fitting grooves 143 are provided with a gap in the longitudinal direction of the tie bar 140. The first fitting portion 144 includes first protruding portions 146 which are fitted into the fitting grooves 143. Similarly, the second fitting portion 145 includes second protruding portions 147 which are fitted into the fitting groove 143. The first protruding portion 146 and the second protruding portion 147 are formed in a ring shape in a state where the first fitting portion 144 and the second fitting portion 145 are closed, and a plurality of first protruding portions 146 and a plurality of second protruding portions 147 are provided at intervals in the longitudinal direction of the tie bar 140. For example, the first fitting portion 144 and the second fitting portion 145 are provided at each of the four corners of the movable platen 120.

In addition, in the present embodiment, each of the fitting grooves 143 are formed in a ring shape. However, the fitting groove maybe formed in a spiral shape. Inaddition, in the present embodiment, each of the first protruding portion 146 and the second protruding portion 147 is formed in a ring shape in a state where the first fitting portion 144 and the second fitting portion 145 are closed. However, each of the first protruding portion 146 and the second protruding portion 147 may be formed in a spiral shape.

If the first fitting portions 144 and the second fitting portions 145 are opened, as shown in Fig. 18A, the first protruding portions 146 and the second protruding portions 147 are pulled out from the fitting grooves 143 of the tie bars 140, and the connections between the tie bars 140 and the movable platen 120 are released. If the movable platen 120 is moved in the left direction in Figs. 18A and 18B with respect to the tie bars 140 in a state where the connections between the tie bars 140 and the movable platen 120 are released, the movable mold 12 is moved away from the stationary mold 11, and the mold of the mold unit 10 is opened. Similarly, if the movable platen 120 is moved in the right direction in Figs. 18A and 18B with respect to the tie bars 140 in a state where the connections between the tie bars 140 and the movable platen 120 are released, the movable mold 12 is moved close to the stationary mold 11, and the mold of the mold unit 10 is closed.

If the first fitting portions 144 and the second fitting portions 145 are closed when the mold closing of the mold unit 10 is completed, as shown in Fig. 18B, the first protruding portions 146 and the second protruding portions 147 are fitted into the fitting grooves 143 of the tie bars 140 and tie bars 140 and movable platen 120 are connected to each other. If the mold clamping cylinders 111 formed inside the stationary platen 110 press the pistons 142 in the mold clamping direction in a state where the tie bars 140 and the movable platen 120 are connected to each other, the mold of the mold unit 10 is clamped.

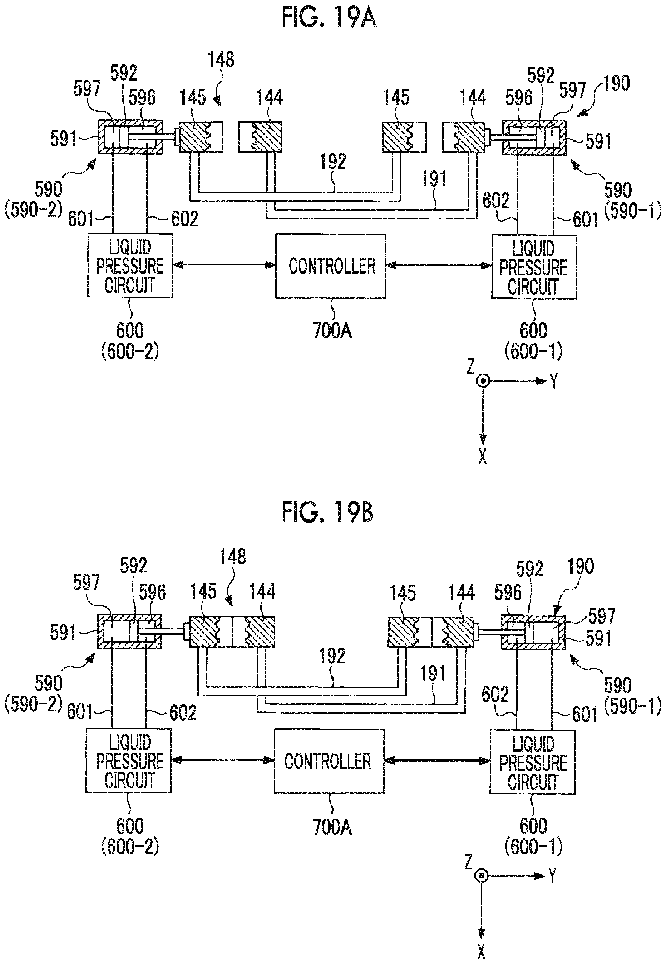

Figs. 19A and 19B are views showing an opening/closing unit which opens and closes the first fitting portions and the second fitting portions when the mold closing of the mold clamping unit according to the fifth embodiment is completed. Fig. 19A shows a state where the first fitting portions and the second fitting portions according to the fifth embodiment are opened, and Fig. 19B shows a state where the first fitting portions and the second fitting portions according to the fifth embodiment are closed. As shown in Figs. 19A and 19B, the mold clamping unit 100A includes an opening/closing unit 190 which performs the opening/closing operation of moving the first fitting portions 144 and the second fitting portions 145 close to or away from each other.

The opening/closing unit 190 includes the first liquid pressure cylinder 590-1 which moves the first fitting portions 144 and the first liquid pressure circuit 600-1 which supplies the liquid pressure (for example, hydraulic pressure) of the first working liquid to the first liquid pressure cylinder 590-1. For example, as shown in Fig. 7, the first liquid pressure circuit 600-1 includes a first pressure detector 655 or the like. The plurality of first fitting portions 144 may be connected by a first connection member 191. It is possible to reduce the number of the first liquid pressure cylinders 590-1 and the number of the first liquid pressure circuits 600-1.

The opening/closing unit 190 includes the second liquid pressure cylinder 590-2 which moves the second fitting portions 145 and the second liquid pressure circuit 600-2 which supplies the liquid pressure of the second working liquid to the second liquid pressure cylinder 590-2. For example, as shown in Fig. 7, the second liquid pressure circuit 600-2 includes a first pressure detector 655 or the like. The plurality of second fitting portions 145 may be connected by a second connection member 192. It is possible to reduce the number of the second liquid pressure cylinders 590-2 and the number of the second liquid pressure circuits 600-2.

In addition, the disposition of the first fitting portion 144 and the second fitting portion 145 may be reversed. In Figs. 19A and 19B, the liquid pressure cylinder 590 on the right sides of the drawings is the first liquid pressure cylinder 590-1 and the liquid pressure cylinder 590 on the left sides in the drawings is the second liquidpressure cylinder 590-2. However, the liquid pressure cylinder 590 on the right sides of the drawings may be the second liquid pressure cylinder 590-2 and the liquid pressure cylinder 590 on the left sides in the drawings may be the first liquid pressure cylinder 590-1. Similarly, in Figs. 19A and 19B, the liquid pressure circuit 600 on the right sides of the drawings is the first liquid pressure circuit 600-1 and the liquid pressure circuit 600 on the left sides in the drawings is the second liquid pressure circuit 600-2. However, the liquid pressure circuit 600 on the right sides of the drawings may be the second liquid pressure circuit 600-2 and the liquid pressure circuit 600 on the left sides in the drawings may be the first liquid pressure circuit 600-1.

The controller 700A controls the first liquid pressure circuit 600-1 and the second liquid pressure circuit 600-2 so as to control the first liquid pressure cylinder 590-1 and the second liquid pressure cylinder 590-2. For example, as shown in Fig. 16, the controller 700A includes the opening operation processing unit 711, the closing operation processing unit 712, the touch determination unit 713, the entrapment determination unit 714, and the liquid pressure holding processing unit 715. Moreover, the controller 700A may have other processing functions as described above.

The opening operation processing unit 711 performs the opening operation for moving the first fitting portion 144 and the second fitting portion 145 away from each other. The opening operation processing unit 711 may simultaneously move both the first fitting portion 144 and the second fitting portion 145 in directions opposite to each other.

The closing operation processing unit 712 performs the closing operation for moving the first fitting portion 144 and the second fitting portion 145 close to each other. The closing operation processing unit 712 may simultaneously move both the first fitting portion 144 and the second fitting portion 145 in directions opposite to each other.

The touch determination unit 713 determines whether or not the first fitting portion 144 and the second fitting portion 145 come into contact with each other during the closing operation by the closing operation processing unit 712. After the touch determination unit 713 confirms that the first fitting portion 144 and the second fitting portion 145 come into contact with each other, that is, after the touch determination unit 713 confirms the connections between the tie bars 140 and the movable platen 120, the mold clamping force can be generated by the mold clamping cylinder 111 formed inside the stationary platen 110. It is possible to prevent the mold clamping force from being generated in a state where the tie bars 140 and the movable platen 120 are not connected to each other. Accordingly, it is possible to prevent an abrupt movement of the piston 142 and it is possible to prevent damages of the mold clamping cylinder 111.

Similarly to the modification example of the first embodiment, for the determination of the touch determination unit 713, the first pressure detector 655 of the first liquid pressure circuit 600-1 is used. The first pressure detector 655 detects the liquid pressure of the first working liquid which moves the first fitting portion 144 close to the second fitting portion 145. If the first fitting portion 144 approaches the second fitting portion 145 and comes into contact with the second fitting portion 145, the first fitting portion 144 is pushed back by the second fitting portion 145. Accordingly, the detection value of the first pressure detector 655 increases and reaches the first threshold value P1 set in advance by experiment or the like. Therefore, the touch determination unit 713 can determine whether or not the first fitting portion 144 and the second fitting portion 145 come into contact with each other, depending on whether or not the detection value of the first pressure detector 655 is equal to or more than the first threshold value P1.

The type of a detector used for the determination of the touch determination unit 713 is not limited to the first pressure detector 655 of the first liquid pressure circuit 600-1. In addition, the number of detectors used for the determination of the touch determination unit 713 is not limited to one, and a plurality of detectors may be used. The touch determination unit 713 may determine whether or not the first fitting portion 144 and the second fitting portion 145 come into contact with each other, based on detection results of a plurality of detectors described later.

For example, the detector used for the determination of the touch determination unit 713 may be the second pressure detector 656 of the first liquid pressure circuit 600-1. Similarly to the first pressure detector 655 of the first liquid pressure circuit 600-1, the second pressure detector 656 of the first liquid pressure circuit 600-1 detects the liquid pressure of the first working liquid which moves the first fitting portion 144 close to the second fitting portion 145. The relationship between the elapsed time from the start of the closing operation of the first fitting portion 144 and the second fitting portion 145 and the detection value of the second pressure detector 656 of the first liquid pressure circuit 600-1 is the same as that of Fig. 17, and thus, the descriptions thereof are omitted.

The detector used for the determination of the touch determination unit 713 may be the first pressure detector 655 of the second liquid pressure circuit 600-2. The first pressure detector 655 of the second liquid pressure circuit 600-2 detects the liquid pressure of the second working liquid which moves the second fitting portion 145 close to the first fitting portion 144. The relationship between the elapsed time from the start of the closing operation of the first fitting portion 144 and the second fitting portion 145 and the detection value of the first pressure detector 655 of the second liquid pressure circuit 600-2 is the same as that of Fig. 17, and thus, the descriptions thereof are omitted.

The detector used for the determination of the touch determination unit 713 may be the second pressure detector 656 of the second liquid pressure circuit 600-2. Similarly to the first pressure detector 655 of the second liquid pressure circuit 600-2, the second pressure detector 656 of the second liquid pressure circuit 600-2 detects the liquid pressure of the second working liquid which moves the second fitting portion 145 close to the first fitting portion 144. The relationship between the elapsed time from the start of the closing operation of the first fitting portion 144 and the second fitting portion 145 and the detection value of the second pressure detector 656 of the second liquid pressure circuit 600-2 is the same as that of Fig. 17, and thus, the descriptions thereof are omitted.

The detector used for the determination of the touch determination unit 713 may be a proximity sensor for detecting proximity between the first fitting portion 144 and the second fitting portion 145, a distance sensor for detecting a distance between the first fitting portion 144 and the second fitting portion 145, or a combination of a first position detector for detecting the position of the first fitting portion 144 and a second position detector for detecting the position of the second fitting portion 145.

For example, the proximity sensor transmits signals to the controller 700A only when the first fitting portion 144 and the second fitting portion 145 come into contact with each other. In addition, the proximity sensor may transmit signals to the controller 700A only when the first fitting portion 144 and the second fitting portion 145 do not come into contact with each other. Moreover, the proximity sensor may transmit different signals to the controller 700A when the first fitting portion 144 and the second fitting portion 145 come into contact with each other and do not come into contact with each other. Based on the signals from the proximity sensor, touch determination unit 713 determines whether or not the first fitting portion 144 and the second fitting portion 145 come into contact with each other.

For example, as the distance sensor, a laser displacement meter or the like is used. The laser displacement meter detects the distance between the first fitting portion 144 and the second fitting portion 145 and transmits signals indicating the detection results to the controller 700A. The touch determination unit 713 determines whether or not the first fitting portion 144 and the second fitting portion 145 come into contact with each other, depending on whether or not the distance between the first fitting portion 144 and the second fitting portion 145 is zero.

The first position detector detects the position of the first fitting portion 144 and transmits signals indicating the detection results to the controller 700A. Similarly, the second position detector detects the position of the second fitting portion 145 and transmits signals indicating the detection results to the controller 700A. The touch determination unit 713 calculates the distance between the first fitting portion 144 and the second fitting portion 145 based on the detection results of the first position detector and the detection results of the second position detector, and determines whether or not the first fitting portion 144 and the second fitting portion 145 come into contact with each other, depending on whether or not the calculated distance is zero.

The entrapment determination unit 714 determines whether or not the foreign matter is interposed between the first fitting portion 144 and the second fitting portion 145 during the closing operation by the closing operation processing unit 712. If the entrapment determination unit 714 determines that the foreign matter is interposed between the first fitting portion 144 and the second fitting portion 145 during the closing operation by the closing operation processing unit 712, the closing operation processing unit 712 stops the closing operation. Thereafter, the opening operation processing unit 711 may perform the opening operation. In a case where the foreign matter is interposed between the first fitting portion 144 and the second fitting portion 145 during the closing operation, a gap is formed between the first fitting portion 144 and the second fitting portion 145, and the movable platen 120 and the tie bars 140 are not connected to each other. According to the present embodiment, in the case where the foreign matter is interposed therebetween, the closing operation is stopped, and thus, it is possible to prevent the mold clamping force from being generated in the state where the tie bars 140 and the movable platen 120 are not connected to each other. Accordingly, it is possible to prevent an abrupt movement of the piston 142 and it is possible to prevent damages of the mold clamping cylinder 111.

For example, the entrapment determination unit 714 determines whether or not the foreign matter is interposed therebetween, depending on whether or not a time t until the detection value of the first pressure detector 655 of the first liquid pressure circuit 600-1 reaches the first threshold value P1 from the start of the closing operation of the first fitting portion 144 and the second fitting portion 145 is equal to or less than the set time t0. The set time t0 is set to be slightly shorter than a time required for the closing operation when the foreign matter is not interposed between the first fitting portion 144 and the second fitting portion 145. If the foreign matter is interposed between the first fitting portion 144 and the second fitting portion 145, the first fitting portion 144 and the second fitting portion 145 are pushed back via the foreign matter. Therefore, before the first fitting portion 144 and the second fitting portion 145 come into contact with each other, the detection value of the first pressure detector 655 increases to reach the first threshold value P1, and the time t becomes equal to or less than the set time t0.

Accordingly, in the case where the time t is equal to or less than the set time t0, the entrapment determination unit 714 determines that the foreign matter is interposed between the first fitting portion 144 and the second fitting portion 145 before the first fitting portion 144 and the second fitting portion 145 come into contact with each other. In addition, in the case where the time t is equal to or less than the set time t0, the touch determination unit 713 determines that the first fitting portion 144 and the second fitting portion 145 do not come into contact with each other. Even in the case where the detection value of the first pressure detector 655 reaches the first threshold value P1, if the time t is equal to or less than the set time t0, the foreign matter is interposed between the first fitting portion 144 and the second fitting portion 145. This is because the first fitting portion 144 and the second fitting portion 145 do not come into contact with each other.

Meanwhile, in a case where the time t exceeds the set time t0, the entrapment determination unit 714 determines that the foreign matter is not interposed between the first fitting portion 144 and the second fitting portion 145. Also, in the case where the time t exceeds the set time t0, the touch determination unit 713 determines that the first fitting portion 144 and the second fitting portion 145 come into contact with each other. This is because the detection value of the first pressure detector 655 reaches the first threshold value P1, the foreign matter is not interposed between the first fitting portion 144 and the second fitting portion 145, and thus, the first fitting portion 144 and the second fitting portion 145 come into contact with each other.

In addition, the type of the detector used for the determination of the entrapment determination unit 714 is not limited to the first pressure detector 655 of the first liquid pressure circuit 600-1. As the detector used for the determination of the entrapment determination unit 714, a detector which is the same as the detector used for the determination of the touch determination unit 713 can be used. In addition, the number of detectors used for the determination of the entrapment determination unit 714 is not limited to one, and a plurality of detectors may be used. The entrapment determination unit 714 may determine whether or not the foreign matter is interposed between the first fitting portion 144 and the second fitting portion 145, based on the detection results of the plurality of detectors.

The entrapment determination unit 714 may determine whether or not the foreign matter is interposed therebetween, depending on whether or not the first fitting portion 144 and the second fitting portion 145 come into contact with each other when the elapsed time from the start of the closing operation by the closing operation processing unit 712 reaches a set time t1. The set time t1 is set to be slightly longer than the time required for the closing operation when the foreign matter is not interposed between the first fitting portion 144 and the second fitting portion 145. If the foreign matter is interposed between the first fitting portion 144 and the second fitting portion 145, the first fitting portion 144 and the second fitting portion 145 are pushed back via the foreign matter. Accordingly, when the elapsed time from the start of the closing operation reaches the set time t1, the first fitting portion 144 and the second fitting portion 145 do not come into contact with each other.

Therefore, in the case where the first fitting portion 144 and the second fitting portion 145 do not come into contact with each other touching when the elapsed time from the start of the closing operation reaches the set time t1, the entrapment determination unit 714 determines that the foreign matter is interposed between the first fitting portion 144 and the second fitting portion 145. Meanwhile, in the case where the first fitting portion 144 and the second fitting portion 145 come into contact with each other touching when the elapsed time from the start of the closing operation reaches the set time t1, the entrapment determination unit 714 determines that the foreign matter is not interposed between the first fitting portion 144 and the second fitting portion 145.

in order to hold the liquid pressure at which the first fitting portion 144 and the second fitting portion 145 are pressed against each other after the first fitting portion 144 and the second fitting portion 145 come into contact with each other to be equal to or more than the second threshold value P2, the liquid pressure holding processing unit 715 closes the first flow path 601 of each of the first liquid pressure circuit 600-1 and the second liquid pressure circuit 600-2. The second threshold value P2 is set such that the first fitting portion 144 and the second fitting portion 145 are not opened when the mold clamping force is generated by the mold clamping cylinder 111.

If the detection value of the first pressure detector 655 of the first liquid pressure circuit 600-1 becomes equal to or more than the second threshold value P2 after the first fitting portion 144 and the second fitting portion 145 come into contact with each other, the liquid pressure holding processing unit 715 closes the first electromagnetic switching valve 653 of the first liquid pressure circuit 600-1. As a result, the liquid pressure of the rear chamber 597 of the first liquid pressure cylinder 590-1, that is, the liquid pressure by which the first fitting portion 144 of the first working liquid is pressed to the second fitting portion 145 is held to be equal to or more than the second threshold value P2. This state is maintained even when the motor 620 of the first liquid pressure circuit 600-1 is stopped. By holding the liquid pressure by which the first fitting portion 144 of the first working liquid is pressed to the second fitting portion 145 to be equal to more than the second threshold value P2, it is possible to prevent the first fitting portion 144 and the second fitting portion 145 from being opened when the mold clamping force is generated by the mold clamping cylinder 111. In addition (or in addition to) the detection value of the first pressure detector 655 of the first liquid pressure circuit 600-1, the detection value of the second pressure detector 656 of the first liquid pressure circuit 600-1 may be used. In addition, the liquid pressure holding processing unit 715 may close the first electromagnetic switching valve 653 of the first liquid pressure circuit 600-1 when the elapsed time after the first fitting portion 144 and the second fitting portion 145 come into contact with each other reaches the set time. Here, the set time is set by experiment or the like such that the detection value of the first pressure detector 655 becomes equal to or more than the second threshold value P2 when the first electromagnetic switching valve 653 is closed.

Similarly, if the detection value of the first pressure detector 655 of the second liquid pressure circuit 600-2 becomes equal to or more than the second threshold value P2 after the first fitting portion 144 and the second fitting portion 145 come into contact with each other, the liquid pressure holding processing unit 715 closes the first electromagnetic switching valve 653 of the second liquid pressure circuit 600-2. As a result, the liquid pressure of the rear chamber 597 of the second liquid pressure cylinder 590-2, that is, the liquid pressure by which the second fitting portion 145 of the second working liquid is pressed to the first fitting portion 144 is held to be equal to or more than the second threshold value P2. This state is maintained even when the motor 620 of the second liquid pressure circuit 600-2 is stopped. By holding the liquid pressure by which the second fitting portion 145 of the second working liquid is pressed to the first fitting portion 144 to be equal to more than the second threshold value P2, it is possible to prevent the first fitting portion 144 and the second fitting portion 145 from being opened when the mold clamping force is generated by the mold clamping cylinder 111. In addition (or in addition to) the detection value of the first pressure detector 655 of the second liquid pressure circuit 600-2, the detection value of the second pressure detector 656 of the second liquid pressure circuit 600-2 may be used. In addition, the liquid pressure holding processing unit 715 may close the first electromagnetic switching valve 653 of the second liquid pressure circuit 600-2 when the elapsed time after the first fitting portion 144 and the second fitting portion 145 come into contact with each other reaches the set time. Here, the set time is set by experiment or the like such that the detection value of the first pressure detector 655 becomes equal to or more than the second threshold value P2 when the first electromagnetic switching valve 653 is closed.

In addition, technologies of the first to fourth embodiments maybe applied to the mold clamping unit 100A of the above-described fifth embodiment. When the first fitting portion 144 and the second fitting portion 145 are opened, the rising of the opening operation is faster than that of the related art.

### Brief Description of the Reference Symbols

1A, 1B, 1C, 1D: injection molding machine
12: movable mold (opening/closing member)
16: first split mold (first movable member)
17: second split mold (second movable member)
100: mold clamping unit
144: first fitting portion (first movable member)
145: second fitting portion (second movable member)
148: opening/closing member
300: injection unit
400: movement unit (movable member)
580: split mold opening/closing unit (movable member)
590: liquid pressure cylinder (cylinder)
592: piston
596: front chamber (second chamber)
597: rear chamber (first chamber)
601: first flow path (flow path)
602: second flow path (flow path)
610: liquid pressure pump
653: first electromagnetic switching valve (flow path opening/closing unit)
654: second electromagnetic switching valve (flow path opening/closing unit)
700, 700A: controller
711: opening operation processing unit
712: closing operation processing unit
713: touch determination unit
714: entrapment determination unit
850: direction switching valve (movable member)
901: compression core (movable member)
903: compression cylinder (cylinder)

## Claims

1. An injection molding machine, comprising:
a cylinder (590) which drives a movable member which is a component of the injection molding machine;
a liquid pressure pump (610) which supplies a working liquid to the cylinder (590);
a flow path (601, 602) through which the liquid pressure pump (610) and the cylinder (590) are connected to each other;
a flow path opening/closing unit (653, 654) which is provided in the flow path and opens or closes the flow path; and
acontroller (700) which is configured to control operations of the liquid pressure pump (610) and the flow path opening/closing unit (653, 654),
wherein the controller (700) is configured to open the flow path by the flow path opening/closing unit (653, 654) to operate the cylinder (590) and to drive the movable member in a state of driving the liquid pressure pump (610) in a state where the flow path is closed by the flow path opening/closing unit (653, 654) so as to increase a liquid pressure of the working liquid between the liquid pressure pump (610) and the flow path opening/closing unit (653, 654).

2. The injection molding machine according to claim 1,
wherein the flow path includes a first flow path which is connected to a first chamber of the cylinder (590) and a second flow path which is connected to a second chamber of the cylinder (590), and
wherein the flow path opening/closing unit (653, 654) is provided in at least one of the first flow path and the second flow path.

3. The injection molding machine according to claim 1 or 2,
wherein the movable member is a split mold opening/closing unit which opens or closes a first split mold and a second split mold constituting a movable mold in a mold clamping unit for injection blow molding included in the injection molding machine .

4. The injection molding machine according to claim 1 or 2,
wherein the movable member is a direction switching valve for switching a flow direction of a molding material in a preplasticizing type injection unit included in the injection molding machine.

5. The injection molding machine according to claim 1 or 2,
wherein the movable member is a compression core of a mold clamping unit included in the injection molding machine.

6. The injection molding machine according to claim 1 or 2,
wherein the movable member is a movement unit which moves an injection unit included in the injection molding machine.

7. The injection molding machine according to any of claims 1 to 6, comprising:
an opening/closing member (12) which includes a first movable member (16) and a second movable member (17) which are moved close to or away from each other to perform an opening/closing operation;
wherein the cylinder (590) includes a first liquid pressure cylinder (590-1) which moves the first movable member (16);
wherein the cylinder (590) includes a second liquid pressure cylinder (590-2) which moves the second movable member (17);
wherein the controller (700) controls the first liquid pressure cylinder (590-1) and the second liquid pressure cylinder (590-2),
and wherein the controller (700) includes
a closing operation processing unit (712) which performs a closing operation in which both the first movable member (16) and the second movable member (17) move close to each other; and
a touch determination unit (713) which determines whether or not the first movable member (16) and the second movable member (17) come into contact with each other during the closing operation by the closing operation processing unit (712).

8. The injection molding machine according to claim 7,
wherein the controller (700) includes an entrapment determination unit (714) which determines whether or not a foreign matter is interposed between the first movable member (16) and the second movable member (17) during the closing operation by the closing operation processing unit (712),
wherein if the entrapment determination unit (714) determines that the foreign matter is interposed between the first movable member (16) and the second movable member (17) during the closing operation by the closing operation processing unit (712), the closing operation processing unit (712) stops the closing operation.

## Patentansprüche

1. Spritzgießmaschine, umfassend:
einen Zylinder (590), der ein bewegliches Element antreibt, das eine Komponente der Spritzgießmaschine ist;
eine Flüssigkeitsdruckpumpe (610), die dem Zylinder (590) eine Arbeitsflüssigkeit zuführt;
einen Strömungsweg (601, 602), durch den die Flüssigkeitsdruckpumpe (610) und der Zylinder (590) miteinander verbunden sind;
eine Strömungsweg-Öffnungs/Schließ-Einheit (653, 654), die im Strömungsweg vorgesehen ist und den Strömungsweg öffnet oder schließt; und
eine Steuereinrichtung (700), die konfiguriert ist, Betriebe der Flüssigkeitsdruckpumpe (610) und der Strömungsweg-Öffnungs/Schließ-Einheit (653, 654) zu steuern,
wobei die Steuereinrichtung (700) konfiguriert ist, den Strömungsweg durch die Strömungsweg-Öffnungs/Schließ-Einheit (653, 654) zu öffnen, um den Zylinder (590) zu betreiben und um das bewegliche Element anzutreiben in einem Zustand des Antreibens der Flüssigkeitsdruckpumpe (610) in einem Zustand, in dem der Strömungsweg durch die Strömungsweg-Öffnungs/Schließ-Einheit (653, 654) geschlossen ist, um einen Flüssigkeitsdruck der Arbeitsflüssigkeit zwischen der Flüssigkeitsdruckpumpe (610) und der die Strömungsweg-Öffnungs/SchließEinheit (653, 654) zu erhöhen.

2. Spritzgießmaschine nach Anspruch 1,
wobei der Strömungsweg einen ersten Strömungsweg, der mit einer ersten Kammer des Zylinders (590) verbunden ist, und einen zweiten Strömungsweg, der mit einer zweiten Kammer des Zylinders (590) verbunden ist, enthält und
wobei die Strömungsweg-Öffnungs/Schließ-Einheit (653, 654) im ersten Strömungsweg und/oder im zweiten Strömungsweg vorgesehen ist.

3. Spritzgießmaschine nach Anspruch 1 oder 2,
wobei das bewegliche Element eine Öffnungs/Schließ-Einheit für eine geteilte Form ist, die eine erste geteilte Form und eine zweite geteilte Form öffnet oder schließt, die eine bewegliche Form in einer Formschließeinheit zum Spritzblasen bilden, die in der Spritzgießmaschine enthalten ist.

4. Spritzgießmaschine nach Anspruch 1 oder 2,
wobei das bewegliche Element ein Richtungsumschaltventil zum Umschalten einer Strömungsrichtung einer Formmasse in einer Einspritzeinheit eines Vorplastifizierungstyps ist, die in der Spritzgießmaschine enthalten ist.

5. Spritzgießmaschine nach Anspruch 1 oder 2,
wobei das bewegliche Element ein Kompressionskern einer Formschließeinheit ist, die in der Spritzgießmaschine enthalten ist.

6. Spritzgießmaschine nach Anspruch 1 oder 2,
wobei das bewegliche Element eine Bewegungseinheit ist, die eine Einspritzeinheit bewegt, die in der Spritzgießmaschine enthalten ist.

7. Spritzgießmaschine nach einem der Ansprüche 1 bis 6, umfassend:
ein Öffnungs/Schließ-Element (12), das ein erstes bewegliches Element (16) und ein zweites bewegliches Element (17) enthält, die nahe aufeinander zu oder voneinander weg bewegt werden, um einen Öffnungs/Schließ-Vorgang durchzuführen;
wobei der Zylinder (590) einen ersten Flüssigkeitsdruckzylinder (590-1) enthält, der das erste bewegliche Element (16) bewegt;
wobei der Zylinder (590) einen zweiten Flüssigkeitsdruckzylinder (590-2) enthält, der das zweite bewegliche Element (17) bewegt;
wobei die Steuereinrichtung (700) den ersten Flüssigkeitsdruckzylinder (590-1) und den zweiten Flüssigkeitsdruckzylinder (590-2) steuert und
wobei die Steuereinrichtung (700) Folgendes enthält:
eine Schließvorgangs-Verarbeitungseinheit (712), die einen Schließvorgang durchführt, wobei sich sowohl das erste bewegliche Element (16) als auch das zweite bewegliche Element (17) nahe aufeinander zu bewegen; und
eine Berührungsbestimmungseinheit (713), die bestimmt, ob das erste bewegliche Element (16) und das zweite bewegliche Element (17) während des Schließvorgangs durch die Schließvorgangs-Verarbeitungseinheit (712) miteinander in Kontakt gelangen oder nicht.

8. Spritzgießmaschine nach Anspruch 7,
wobei die Steuereinrichtung (700) eine Einschlussbestimmungseinheit (714) enthält, die bestimmt, ob während des Schließvorgangs durch die Schließvorgangs-Verarbeitungseinheit (712) eine Fremdsubstanz zwischen dem ersten beweglichen Element (16) und dem zweiten beweglichen Element (17) eingeschlossen ist oder nicht,
wobei dann, wenn die Einschlussbestimmungseinheit (714) bestimmt, dass die Fremdsubstanz während des Schließvorgangs durch die Schließvorgangs-Verarbeitungseinheit (712) zwischen dem ersten beweglichen Element (16) und dem zweiten beweglichen Element (17) eingeschlossen ist, die Schließvorgangs-Verarbeitungseinheit (712) den Schließvorgang anhält.

## Revendications

1. Une machine de moulage à injection, comprenant :
un cylindre (590) qui entraîne un élément mobile qui est un composant de la machine de moulage à injection ;
une pompe à liquide sous pression (610) qui fournit un liquide de travail au cylindre (590) ;
un trajet d'écoulement (601, 602) à travers lequel la pompe à liquide sous pression (610) et le cylindre (590) sont reliés l'un à l'autre ;
une unité d'ouverture/de fermeture de trajet d'écoulement (653, 654) qui est placée dans le trajet d'écoulement et ouvre ou ferme le trajet d'écoulement ; et
un dispositif de commande (700) qui est configuré pour commander des opérations de la pompe à liquide sous pression (610) et de l'unité d'ouverture/de fermeture de trajet d'écoulement (653, 654),
dans laquelle le dispositif de commande (700) est configuré pour ouvrir le trajet d'écoulement au moyen de l'unité d'ouverture/de fermeture de trajet d'écoulement (653, 654) pour actionner le cylindre (590) et pour entraîner l'élément mobile dans un état d'entraînement de la pompe à liquide sous pression (610) dans un état où le trajet d'écoulement est fermé par l'unité d'ouverture/de fermeture de trajet d'écoulement (653, 654) de sorte à augmenter une pression de liquide du liquide de travail entre la pompe à liquide sous pression (610) et l'unité d'ouverture/de fermeture de trajet d'écoulement (653, 654).

2. La machine de moulage à injection selon la revendication 1,
dans laquelle le trajet d'écoulement inclut un premier trajet d'écoulement qui est relié à une première chambre du cylindre (590) et un second trajet d'écoulement qui est relié à une seconde chambre du cylindre (590), et
dans laquelle l'unité d'ouverture/de fermeture de trajet d'écoulement (653, 654) est prévue dans au moins l'un du premier trajet d'écoulement et du second trajet d'écoulement.

3. La machine de moulage à injection selon la revendication 1 ou 2,
dans laquelle l'élément mobile est une unité d'ouverture/de fermeture de moule à coins qui ouvre ou ferme un premier moule à coins et un second moule à coins constituant un moule mobile dans une unité de verrouillage du moule conçue pour le moulage d'injection-soufflage inclus dans la machine de moulage à injection.

4. La machine de moulage à injection selon la revendication 1 ou 2,
dans laquelle l'élément mobile est une valve de commutation de direction pour commuter une direction d'écoulement d'un matériau de moulage dans une unité d'injection de type préplastification incluse dans la machine de moulage à injection.

5. La machine de moulage à injection selon la revendication 1 ou 2,
dans laquelle l'élément mobile est un noyau de compression d'une unité de verrouillage de moule incluse dans la machine de moulage à injection.

6. La machine de moulage à injection selon la revendication 1 ou 2,
dans laquelle l'élément mobile est une unité de déplacement qui déplace une unité d'injection incluse dans la machine de moulage à injection.

7. La machine de moulage à injection selon l'une quelconque des revendications 1 à 6, comprenant :
un élément d'ouverture/de fermeture (12) qui inclut un premier élément mobile (16) et un second élément mobile (17) qui se rapprochent ou s'éloignent l'un de l'autre pour réaliser une opération d'ouverture/de fermeture ;
dans laquelle le cylindre (590) inclut un premier cylindre de liquide sous pression (590-1) qui déplace le premier élément mobile (16) ;
dans laquelle le cylindre (590) inclut un second cylindre de liquide sous pression (590-2) qui déplace le second élément mobile (17) ;
dans laquelle le dispositif de commande (700) commande le premier cylindre de liquide sous pression (590-1) et le second cylindre de liquide sous pression (590-2),
et dans laquelle le dispositif de commande (700) inclut
une unité de traitement d'opération de fermeture (712) qui réalise une opération de fermeture dans laquelle le premier élément mobile (16) et le second élément mobile (17) se rapprochent tous deux l'un de l'autre ; et
une unité de détermination de contact (713) qui détermine si le premier élément mobile (16) et le second élément mobile (17) viennent ou non en contact l'un avec l'autre au cours de l'opération de fermeture par l'unité de traitement d'opération de fermeture (712).

8. La machine de moulage à injection selon la revendication 7,
dans laquelle le dispositif de commande (700) inclut une unité de détermination de piégeage (714) qui détermine si un corps étranger est ou non intercalé entre le premier élément mobile (16) et le second élément mobile (17) au cours de l'opération de fermeture par l'unité de traitement d'opération de fermeture (712),
dans laquelle si l'unité de détermination de piégeage (714) détermine que le corps étranger est intercalé entre le premier élément mobile (16) et le second élément mobile (17) au cours de l'opération de fermeture par l'unité de traitement d'opération de fermeture (712), l'unité de traitement d'opération de fermeture (712) interrompt l'opération de fermeture.
